# EUROPEAN PATENT SPECIFICATION

(11) **EP 4 689 542 B1**
(45) Date of publication and mention of the grant of the patent: **30.09.2026**
(21) Application number: 24713475.2
(22) Date of filing: 25.03.2024
(51) Int. Cl.: G01B 21/04, G01B 9/02, G01B 9/02055, G01B 9/02091, G02B 26/08

(54) **A METHOD FOR CHARACTERIZING A SCANNING MIRROR IN A SCAN CONTROL SYSTEM TO DETEMINE CONTROL PARAMETERS, A SCAN CONTROL SYSTEM, AND AN OPTICAL COHERENCE TOMOGRAPHY (OCT) SYSTEM COMPRISING SAID SCAN CONTROL SYSTEM**
VERFAHREN ZUR CHARAKTERISIERUNG EINES SCANSPIEGELS IN EINEM SCANSTEUERSYSTEM ZUR BESTIMMUNG VON STEUERPARAMETERN, SCANSTEUERSYSTEM, UND OPTISCHES KOHÄRENZTOMOGRAPHIESYSTEM (OCT) UMFASSEND DAS GENANNTE SCANSTEUERSYSTEM
PROCÉDÉ DE CARACTÉRISATION DE MIROIR DE BALAYAGE DANS UN SYSTÈME DE COMMANDE DE BALAYAGE POUR LA DÉTERMINATION DE PARAMÈTRES DE COMMANDE, SYSTÈME DE COMMANDE DE BALAYAGE ET SYSTÈME DE TOMOGRAPHIE EN COHÉRENCE OPTIQUE (OCT) COMPRENANT LEDIT SYSTÈME DE COMMANDE DE BALAYAGE

(30) Priority: 27.03.2023 EP 23164396
(43) Date of publication of application: 11.02.2026
(73) Proprietor: Leica Microsystems NC, Inc., Durham, NC 27703 (US); Leica Microsystems CMS GmbH, 35578 Wetzlar (DE)
(72) Inventor: GHOFRANI, Mehran, Deerfield, Illinois 60015 (US)
(74) Representative: J A Kemp LLP
(86) International application number: PCT/EP2024/057965
(87) International publication number: WO 2024/200362

(56) References cited:
- CN-A- 113 514 950
- MILANOVIC VELJKO ET AL: "Iterative learning control algorithm for greatly increased bandwidth and linearity of MEMS mirrors in LiDAR and related imaging applications", PROCEEDINGS OF SPIE; [PROCEEDINGS OF SPIE ISSN 0277-786X VOLUME 10524], SPIE, US, vol. 10545, 22 February 2018 (2018-02-22), pages 1054513 - 1054513, XP060105708, ISBN: 978-1-5106-1533-5, DOI: 10.1117/12.2291428
- ZHANG PENGCHENG ET AL: "Position Measurement of Laser Center by Using 2-D PSD and Fixed-Axis Rotating Device", IEEE ACCESS, vol. 7, 7 October 2019 (2019-10-07), pages 140319 - 140327, XP011749604, DOI: 10.1109/ACCESS.2019.2943910
- LIU TAILONG ET AL: "Scanning optimization of an electrothermally-actuated MEMS mirror for applications in optical coherence tomography endoscopy", SENSORS AND ACTUATORS A: PHYSICAL, ELSEVIER BV, NL, vol. 335, 11 January 2022 (2022-01-11), XP086975026, ISSN: 0924-4247, [retrieved on 20220111], DOI: 10.1016/J.SNA.2022.113377

## Description

### TECHNICAL FIELD

The present disclosure relates generally to characterization of a scanning mirror. More specifically, the disclosure relates to a method for characterizing a scanning mirror in a scan control system to determine control parameters for use in a closed-loop feedback configuration of the scan control system. The disclosure further relates to a scan control system, and an optical coherence tomography (OCT) system comprising the scan control system.

### BACKGROUND ART

Optical coherence tomography (OCT) is performed using an optical instrument which allows the generation of a cross-sectional image of biological tissue. It is possible to achieve axial resolutions well below 8 microns using monochromatic light having a constant phase difference which allows OCT scans to be useful in probing living tissue (in vivo) as well as in other applications. As OCT scans cannot penetrate to a great depth they are particularly useful for probing skin tissues and in ophthalmology.

The measuring principle of the OCT system relies on interference of light between a sample light beam scanning a sample and a reference light beam. Put differently, the OCT system comprises a coherent light source, an interferometer having a reference light beam path and a sample light beam path, an optical detection system and scanning mirror arrangements allowing for the sample light beam to be scanned across the sample. Depth information of the sample is obtained by detecting and analysing the interference from backscattered light from different sample depths and light from the reference light beam path.

In more detail, the three-dimensional (3D) OCT imaging of a sample is achieved by combining optical information in the form of interferometric spectra obtained at a position of the sample light beam on the sample in an axial scan with lateral scanning of the sample light beam across the sample. The axial scan may be referred to as longitudinal scan, A-scan, or Z-scan and the lateral scan may be referred to as a B-scan or an XY-scan. The XY-scan may be performed in different lateral scanning patterns, including lines, raster scans, radial scans, circles, or other patterns. Thus, OCT images are obtained from optical interference signals while the OCT system is performing A-scans and XY-scans for a sample. Generally, the A-scans are made at a series of XY coordinates to obtain a volumetric image of a sample. In other words, an A-scan may be acquired at each point in an XY-scan of the sample to build up a complete three-dimensional OCT image of the sample.

Methods for characterizing scanning mirrors in an open loop scan control system to determine control parameters necessary for the scanning patterns are known from documents CN 113 514 950 A and M. Veljko et al: "Iterative learning control algorithm for greatly increased bandwidth and linearity of MEMS mirrors in LiDAR and related imaging applications", Proc. SPIE vol. 10545, DOI: 10.1117/12.2291428.

### SUMMARY STATEMENTS

The disclosed technology seeks to mitigate or obviate at least some of the limitations of closed-loop scan control systems by providing an improved method for characterizing the scanning mirror performance. A more efficient set of control parameters for use in a closed-loop feedback configuration of the scan control system is further achieved. In particular, but not exclusively, some embodiments of the disclosed technology provide improved accuracy in characterizing and correcting for deviations in system parameters for scan control systems for use in optical coherence tomography (OCT) systems.

The following summary statements set out features, which may be preferred features in some embodiments, of the disclosed technology. The invention is defined by the accompanying claims.

The disclosed technology may relate to a spectral domain OCT system. Some embodiments of the disclosed technology provide a scan control system having a configuration which supports a particularly compact housing design for an OCT optical system. Such a design is beneficial for use in surgical applications where the OCT system is provided as an adapter for a microscope. The OCT scan arrangement may be based on micro-electromechanical system (MEMS) scanning mirror arrangement as MEMS designs allow for miniaturization of the OCT system, fast scan speeds and cost-efficient manufacturing. The scanning mirror may be a MEMS scanning mirror.

According to a first aspect of the disclosed technology there is provided a method for characterizing a scanning mirror in a scan control system to determine control parameters for use in a closed-loop feedback configuration of the scan control system. The system comprising:
a scanning mirror arrangement comprising the scanning mirror;
a position sensing detector having a two-dimensional detection surface; wherein an x-axis and a y-axis span the two-dimensional detection surface;
a light source configured to emit a light beam onto the scanning mirror such that the light beam is deflected onto the position sensing detector, wherein the position sensing detector is configured to output:
   a measured position based on the position at which the light beam impinges on the two-dimensional detection surface of the position sensing detector, wherein the measured position pertains to a tilt angle of the scanning mirror; and
   a sum signal pertaining to the intensity of the light beam;
a scan mirror controller configured to drive, using drive parameters, the scanning mirror arrangement such that the scanning mirror is tilted in angle in two-dimensions; and
a processor being communicatively connected to the scan mirror controller and a memory;
wherein the method comprises:
   driving the scanning mirror using drive parameters while the scan control system is in an open-loop feedback configuration;
   determining a set of system parameters pertaining to the performance of the scanning mirror when driven; and
   determining a set of control parameters based on the determined set of system parameters and a set of reference parameters; and
   storing the set of control parameters in the memory.

An advantage being that a method for providing a more accurate characterization of the scanning mirror is provided. The determined set of control parameters allows for a correction of the scanning mirror such that the performance is enhanced. Put differently, an efficient method for characterizing the determined set of system parameters for the scanning mirror is provided. In more detail, the method allows for an improved detection of distortions and deviations of the scanning mirror in relation to a set of reference values. By way of example, the position of the scanning mirror may be determined more accurately. Artefacts due to, for example, variations in the projection of the light beam on the position sensing detector may be characterized. Put differently, the method provides control parameters that may be used in a closed-loop feedback configuration of the scan control system. The scan control system may be understood as being configured to be operational in a closed-loop. The scan control system may be referred to as a closed-loop scan control system. To this end, the method allows for characterization and correction of projection distortions caused by compound angle affects such as keystone and/or non-linear effects pertaining to the tilt motion of the scanning mirror. Distortions pertaining to a coupling in motion between different mirror tilt axes may moreover be characterized. Optical artifacts and image distortions that may be determined by the method may be caused by an isolated factor or a combination of factors. The factors may include, but not be limited to, the angle of incidence for a light beam on the scanning mirror, tipping and tiling angles of the scanning mirror, the separation between the surface of the scanning mirror and the center of rotation for the scanning mirror, the separation and orientation of the position sensing detector relative to the scanning mirror, the position of reflection of the light beam on the scanning mirror and the distance between the center of rotation and the center of reflection for the scanning mirror.

To this end, the method may allow for a more accurate system parameters to be determined and used as control parameters for the operation of the scan mirror control. A more accurate scanning of the scanning mirror may thereby be achieved. A more reliable OCT system is provided. More accurately positioned OCT images may moreover be obtained which is beneficial for instance for use in surgical applications.

To this end, the closed-loop feedback has a technical benefit in that it allows the OCT system to generate more B-scans per second of the object of interest being scanned by suppression of ringing behaviour and resonant behaviour caused by a step change in driving voltage at the end of a scan line. The closed-loop feedback configuration allows for better mirror positioning performance. The characterization of the scanning mirror may, however be achieved in an open-loop feedback configuration. The open-loop feedback configuration may be understood as a state when the closed-loop feedback of the scan control system is disengaged. The method allows for a more accurate characterization of the position of the scanning mirror. The method further allows for a correction of the measured positions such that the scan control system may be operated more accurately in a closed-loop feedback configuration. Put differently, the closed-loop feedback configuration is used stabilize and increase the performance of the scanning mirror.

Automated system calibration may further be provided. Demands and limitations pertaining to additional equipment for determining position may moreover be reduced or mitigated. OCT systems that provide better guidance to a surgeon or other users of the OCT system may further be provided.

According to the invention, the set of reference parameters may comprise a centre position of the position sensing detector and wherein the method comprises:
centring the scanning mirror while the scan control system is in an open-loop feedback configuration such that the light beam is deflected to impinge on the centre position. The method may further comprise:
determining the set of system parameters based on the measured position for the light beam on the position sensing detector;
determining the set of control parameters based on a light beam offset between the measured position and the centre position.

An advantage being that a more accurate determining of the alignment of the scanning mirror may be performed. By centring the scanning mirror in the open-loop feedback configuration an improved determining of the light beam offset may be achieved. By way of example, the scanning mirror may be set to zero drive position and the light beam offset may be detected by the position sensing detector. This may coincide a mirror actuator zero position to a position sensing detector zero position. An advantage being that by measuring a position sensing detector origin offset with respect to a scanning mirror origin in open-loop feedback configuration an accurate positioning in a closed-loop operation of the scan control system may be achieved.

In some embodiments, the method may further comprise:
adjusting using the set of control parameters the drive parameters for the scan mirror controller such that the scanning mirror is tilted and the light beam is deflected to impinge on the centre position.

An advantage being that a correction of the centre position of the light beam on the position sensing device may be achieved. A deviation between measured positions and the centre position may be determined more accurately. The determined set of control parameters may be used in a closed-loop feedback configuration of the scan control system. A more accurate scanning may be performed.

In some embodiments, the method may further comprise:
determining the set of system parameters based on sum signal; and storing the sum signal in the memory.

An advantage being that the sum signal may be observed independently of the measured position. By way of example, the sum signal may be used as an alignment aid to determine and/or set the power of the light source based during alignment. The sum signal may be monitored continuously during scanning of the scanning mirror. The sum signal may be monitored continuously to detect drift of the light intensity of the light source.

In some embodiments, the x-axis may be orthogonal to the y-axis.

The x-axis and y-axis may be aligned with the physical edges of the surface of the PSD, respectively.

In some embodiments, the measured position may have an x-coordinate along the x-axis and the y-coordinate along the y-axis.

An advantage being that the position at which the light beam impinges on the surface of the PSD is less complex to determine.

In some embodiments, the determining the set of system parameters may be based on the measured position comprises calculating the x-coordinate and the y-coordinate using respective equation: $x = \frac{\left({X}_{2}+{Y}_{1}\right) - \left({X}_{1}+{Y}_{2}\right)}{\left({X}_{1}+{X}_{2}+{Y}_{1}+{Y}_{2}\right)} \times \frac{Lx}{2} and y = \frac{\left({X}_{2}+{Y}_{2}\right) - \left({X}_{1}+{Y}_{1}\right)}{\left({X}_{1}+{X}_{2}+{Y}_{1}+{Y}_{2}\right)} \times \frac{Ly}{2}$ , wherein X₁, X₂, Y₁, and Y₂ are current levels measured at the edges of the position sensing device, *Lx* and *Ly* are the respective widths of the two-dimensional detection surface (108), and wherein (*X*₁ *+ X*₂ *+ Y*₁ *+ Y*₂) is the sum signal.

An advantage being that the detected position is normalized such that the measured position is independent of the intensity of the light beam.

In some embodiments, the method may comprise:
centring using drive parameters from the scan mirror controller the scanning mirror such that the light beam is deflected to impinge on the centre position of the position sensing detector;
determining the sum signal at the centre position; and
if the sum signal has an intensity value being at least that of a first threshold intensity value:
   driving using drive parameters from the scan mirror controller to tilt the scanning mirror such that the light beam is deflected to impinge on the position sensing detector at a first start position, the first start position having a minimum x-coordinate and a minimum y-coordinate;
   determining the measured position for the light beam pertaining to the first start position and storing the measured position in the memory; and
   determining the sum signal at the first start position; and
   if the sum signal has an intensity value at least that of a second threshold intensity value:
      adjusting the tilt of the scanning mirror using drive parameters such that the light beam is moved to other x-coordinates along the x-axis; and
      determining the sum signal for each of the other x-coordinates, wherein the adjusting is iterated while the sum signal has intensity value of at least that of a third threshold intensity value, up to a first end position having a maximum x-coordinate; wherein the minimum y-coordinate is held constant during the adjusting such that a first scan line is obtained on the position sensing detector;
      driving using drive parameters from the scan mirror controller to tilt the scanning mirror such that the light beam is deflected to impinge on the position sensing detector at a second start position, the second start position having a minimum x-coordinate and a maximum y-coordinate;
      determining the measured position for the light beam pertaining to the second start position and storing the measured position in the memory; and
      determining the sum signal at the second start position; and
      if the sum signal has an intensity value at least that of a fourth threshold intensity value:
      adjusting the tilt of the scanning mirror using drive parameters such that the light beam is moved to other x-coordinates along the x-axis; and
      determining the sum signal for each of the other x-coordinates, wherein the adjusting is iterated while the sum signal has intensity value of at least that of a fifth threshold intensity value, up to a second end position having a maximum x-coordinate; wherein the maximum y-coordinate is held constant during the adjusting such that a second scan line is obtained on the position sensing detector.

An advantage being that an efficient alignment procedure is provided. By measuring the sum signal as the scanning mirror is scanned across a set scan range it may be ensured that the intensity of the light beam remains above a threshold value across the set scan range. Obstructions, distortions or other causes of light intensity loss across the scanning range may be identified. Put differently, a monitoring the light intensity provides a mechanism for alignment of the laser on the scanning mirror as any occlusion will result in drop in the sum signal. The set scan range may be the full tilt angle of the scanning mirror. A maximum scan range across the position sensing device may thereby be characterized. The determined sum signal further provides feedback information for alignment of the light source relative to the scanning mirror. The driving, centring and/or the adjusting may be performed when the scan control system is in an open-loop feedback configuration.

In some embodiments, the driving the scanning mirror may be achieved using the set of control parameters based on the light beam offset.

In some embodiments, the method may comprise characterizing a rotational direction of the scanning mirror by:
driving using a first set of drive parameters from the scan mirror controller to scan the scanning mirror such that the light beam is scanned across the two-dimensional detection surface of the position sensing detector thereby forming a third scan line, wherein the third scan line is along the x-axis of the two-dimensional detection surface;
determining the set of system parameters based on a first set of measured positions for the third scan line;
determining the set of control parameters based on a first rotational deviation value for the first set of measured positions relative to the x-axis using a mathematical model.

In some embodiments, the method may comprise characterizing a rotational direction of the scanning mirror by:
driving using a second set of drive parameters from the scan mirror controller to scan the scanning mirror such that the light beam is scanned across the two-dimensional detection surface of the position sensing detector thereby forming a fourth scan line, wherein the fourth scan line is along the y-axis of the two-dimensional detection surface;
determining the set of system parameters based on a second set of measured positions for the fourth scan line;
determining the set of control parameters based on a second rotational deviation value for the second set of measured positions relative to the y-axis using a mathematical model.

An advantage being any rotational angle deviations in between the coordinate system for the scanning mirror and the coordinate system of the position sensing detector may be determined. Put differently a rotational misalignment between the x-axis pertaining to the tilt angles of scanning mirror and the x-axis pertaining to the orientation of the position sensing detector may be determined. Correspondingly, a rotational misalignment between the y-axis pertaining to the tilt angles of scanning mirror and the y-axis pertaining to the orientation of the position sensing detector may be determined. The characterizing of the rotational direction may be performed while the scan control system is in an open-loop feedback configuration.

In some embodiments, the method comprises performing a linear curve fit to at least one of the first and the second set of measured positions to determine the first and the second rotational deviation value, respectively. An average rotational deviation value may be obtained by averaging the first rotational and the second deviation values.

An advantage being that the linear curve fit may be applied to determine the rotational angle of for a set of measured positions in case of a measured non-linear line. The non-linear line may be a result of a compound angle effect. Interpolation between data points further allows for a more accurate curve fitting.

In some embodiments, the position sensing detector may form a plane and has a coordinate system having an x-axis and a y-axis spanning the plane. The x-axis and y-axis may be orthogonal. The x-axis and y-axis may be aligned with the physical edges of the surface of the position sensing detector, respectively.

In some embodiments, the mathematical model may be of the form: $θ = {sin}^{- 1} \left(\frac{Δ x}{r}\right) θ = {sin}^{- 1} \left(\frac{Δ y}{r}\right)$
, where *Θ* is a rotational angle, *r* is the radius, Δ*x* and Δ*y* are the rotational deviation values relative to the x-axis and y-axis, respectively, and wherein the set of control parameters are based on the transformation: $\left[\begin{matrix}x \\ y\end{matrix}\right] = \left[\begin{matrix}cos \left(θ\right) & sin \left(θ\right) \\ - sin \left(θ\right) & cos \left(θ\right)\end{matrix}\right] \left[\begin{matrix}x ′ \\ y ′\end{matrix}\right]$
, where *Θ* is the rotational angle, x' and *y*' are the measured positions and x and y are compensated positions after using the transformation.

An advantage being that a robust characterization and correction for a rotational deviation may be obtained. A more precise control of the scanning mirror position may thereby be provided. An improved feedback loop for the closed-loop feedback configuration of the scan control system may further be provided by use of the compensated positions. A real-time correction may, moreover, be provided.

In some embodiments, the system may further comprise an amplifier configured to amplify a current generated as the light beam impinge on the two-dimensional detection surface of the position sensing detector, the amplifier having an offset input, wherein the method comprises:
determining for each measured position, the set of system parameters based on the sum signal; and
determining the set of control parameters comprising the sum signal as an offset signal such that the output current from the amplifier is held at a mid-scale value for each measured position.

An advantage being that light source intensity may be monitored and the sum signal may be used as feedback to offset to the amplifier such that amplifier is outputs at amplified current midscale, i.e. at a mid-value of an output range. An advantage being that as the offset into the amplifier is proportional to the light intensity of the light beam on the position sending device, i.e. the higher the light intensity, the higher the value of the sum signal, and the lower the offset into the amplifier. The amplifier may be an operational amplifier. An advantage being that that a simplified electronic design may be provided for the scan control system. This as the amplifier may operate together with other amplifiers of a set of amplifiers with a single supply. This may reduce the need for use of a divide operation in the analog circuit as the incident light intensity is kept constant. The set of amplifiers may be configured to output signals pertaining to X₁, X₂, Y₁, and Y₂, respectively.

In some embodiments, the adjusting the intensity of the light beam such that the sum signal may be held constant whereby an amplification gain for the amplifier is held within an amplification range.

An advantage being that by monitoring and keeping the light intensity constant preserves the signal-to-noise ratio of the measured position.

In some embodiments, the system may further comprise an amplification circuit configured to amplify signals pertaining to measured positions from the position sensing device and to send the amplified signals to the scan mirror controller, the method comprises:
driving using a fifth set of drive parameters from the scan mirror controller to scan the scanning mirror such that the light beam is scanned a first distance along the x-axis and a second distance along the y-axis, wherein the first and the second distances have a set length ratio;
determining the set of system parameters based on a third and a fourth set of measured positions pertaining to the first and the second scan distances, respectively; and
determining the set of control parameters based a measured length ratio for the third and fourth set of measured positions, wherein the control parameters comprises an amplification adjustment factor for the amplification circuit such that a difference between the measured length ratio and the set length ratio is compensated for.

An advantage being that a distortion in the projection of the light beam on the position sensing detector due to the compound angle effect of the motion of the scanning mirror may be characterized. The extend to projection distortions may depend on the angle of incident of the light beam on the scanning mirror. By way of example, the projected y-axis motion on the position sensing device may be shorter than x-axis, or vice versa. The method further allows for determining of system control parameters such that a compensation for the projected short axis may be achieved. The compensation may be achieved by the amplification adjustment factor pertaining to the short axis.

In some embodiments, the system may further comprise a signal generator arrangement configured to drive the scanning mirror at a range of drive frequencies and to determine a frequency response amplitude for each of the drive frequencies, and a set of notch filters each configured to attenuate a frequency band around a central frequency, wherein the method comprises:
driving, by the signal generator arrangement, the scanning mirror over a range of drive frequencies;
determining frequency response amplitudes for the scanning mirror for each drive frequency to identify a resonance frequency;
determining the set of system parameters based on a matching of a centre frequency of one of the set of notch filters to the identified resonance frequency; and
determining the set of control parameters based on the matched centre frequency, thereby allowing for use of the notch filter having the matched centre frequency in a closed-loop feedback configuration of the scan control system.

An advantage being that the resonance frequency of the scanning mirror may be determined. The method further allows for a matching of the resonance frequency to a notch filter having a corresponding centre frequency. By using the notch filter having the corresponding centre frequency excitation of the scanning mirror at the resonance frequency may be prevented when driving the scanning mirror. A more robust scanning may thereby be provided. Problems associated with driving the scanning mirror at the resonance frequency may moreover be reduced. A more durable scan control system may be provided.

A second aspect of the disclosed technology comprises a scan control system for controlling mirror position for a scanning mirror in a closed-loop feedback configuration. The system being arranged to perform the method as described above. The system comprising:
a scanning mirror arrangement comprising the scanning mirror;
a position sensing detector having a two-dimensional detection surface; a light source configured to emit a light beam onto the scanning mirror such that the light beam is deflected onto the position sensing detector, wherein the position sensing detector is configured to output a measured position based on the position at which the light beam impinges on the two-dimensional detection surface of the position sensing detector, the measured position pertaining to a tilt angle of the scanning mirror;
a scan mirror controller configured to drive, using drive parameters, the scanning mirror arrangement such that the scanning mirror is tilted in angle in two-dimensions; and
a processor communicatively connected to the scan mirror controller, wherein the scan mirror controller is configured to receive a set of control parameters for use in a closed-loop feedback configuration of the scan control system.

Effects and features of the second aspect are to a large extent analogous to those described above in connection with the first aspect. Embodiments mentioned in relation to the first aspect are largely compatible with the second aspect.

An advantage being that a more accurate closed-loop control system may be provided with the set of control parameters. Demands for correction of a control system when, by way of example, delivered to a costumer, may be reduced.

In some embodiments, the two-dimensional detection surface of the position sensing detector is a flat surface.

In some embodiments, the scanning mirror arrangement is a micro-electromechanical system (MEMS) scanning mirror arrangement.

An advantage being that that an efficient scanning of the sample light beam may be achieved. Fast scan speeds and reduced footprint may be achieved by using a MEMS scanning mirror.

In some embodiments, the disclosed technology comprises use of the system as described above for optical coherence tomography, OCT based microscopy.

A third aspect of the disclosed technology an optical coherence tomography, OCT, system configured to operate using the scan control system may be provided. The OCT system further comprising:
a sample light source configured to emit a sample light beam onto the scanning mirror such that the sample light beam is deflected onto a sample, wherein the scan controller is configured to laterally scan the sample light beam across a surface of the sample using the close-loop position feedback; and
an optical detection system configured to detect light reflected back from the sample such that an optical image of the sample is obtained, and a reference light beam, wherein the OCT system is configured to generate axially resolved optical information from the sample as the sample light beam is scanned laterally across the sample by using optical path length differences OPLD, between the reference light beam and the sample light beam.

Effects and features of the third aspect are to a large extent analogous to those described above in connection with the first and the second aspects. Embodiments mentioned in relation to the first and second aspects are largely compatible with the third aspect.

An advantage being that an improved closed-loop feedback configuration for the scan control system is provided that can be used in the OCT system. The scan control system and related methods allow for more accurate control parameters for use in a closed-loop feedback configuration of the scan control system. Put differently, the OCT system may utilize a scan control system comprising the stored set of control parameters in the closed-loop feedback configuration of the scan control system. An OCT system configured such that the OCT imaging can be performed in a reliable manner with higher accuracy and without significant cost increases to the scan control systems is therefore provided.

An advantage of the OCT system is that efficient generation of a cross-sectional images of biological tissue may thereby be obtained. By way of example, the OCT system allows for imaging of the distinctive layers of a biological sample such as a retina. A more accurate positioning and imaging allows for improved characterization of the biological sample. The images acquired may allow for characterization and identification of diseases of the retina.

A fourth aspect of the disclosed technology comprises a computer program with a program code for performing the method according to the first aspect when the computer program is run on a processor.

Effects and features of the fourth aspect are to a large extent analogous to those described above in connection with the first, second, and third aspects. Embodiments mentioned in relation to the first, second, and third, aspects are largely compatible with the fourth aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and it may be readily apparent to combine such features disclosed in the context of one aspect or embodiment above with those disclosed in the description someone of ordinary skilled in the art.

### DESCRIPTION OF THE ACCOMPANYING DRAWINGS

Some embodiments of the disclosed technology will now be described by way of example only and with reference to the accompanying drawings in which:
Figure 1 shows schematically a scan control system;
Figure 2 shows a general block diagram showing the method according to some embodiments.
Figure 3 shows schematically a spectral domain optical coherence tomography (OCT) system comprising the scan control system;
Figure 4 illustrates by way of example characterization of position alignment for a scanning mirror according to some embodiments;
Figure 5 illustrates by way of example characterization of rotation alignment for a scanning mirror according to some embodiments;
Figure 6 illustrates by way of example amplification circuits for a scan control system according to some embodiments;
Figure 7 illustrates by way of example characterization of a scanning mirror according to some embodiments;
Figure 8 illustrates by way of example characterization of a scanning mirror according to some embodiments;
Figure 9 shows a schematic illustration of a system configured to perform the method described herein.

### DETAILED DESCRIPTION

The detailed description set forth below provides examples of embodiments of the disclosed technology which are explained in sufficient detail to enable those skilled in the art to put the disclosed technology into practice.

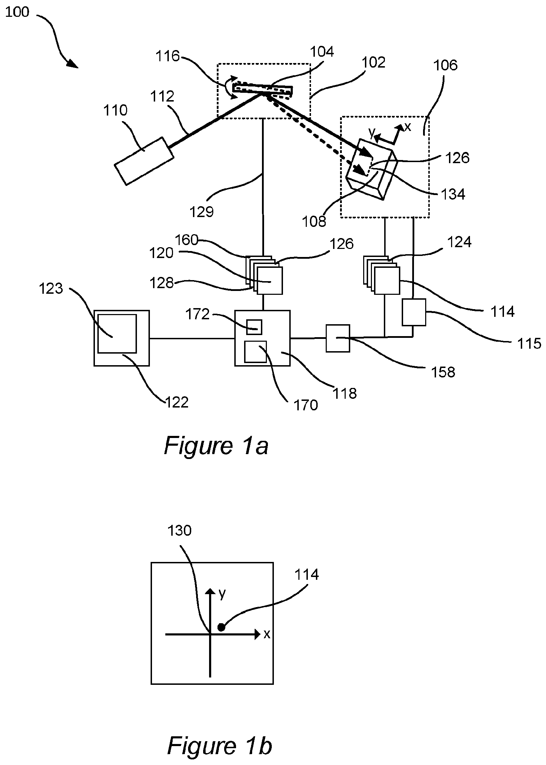

Figure 1 shows schematically a scan control system 100 according to some embodiments. The system 100 may be configured in an open-loop feedback configuration or a closed-loop feedback configuration. The system 100 is configured to operate in an optical coherence tomography system, as will be described. The system 100 comprising: a scanning mirror arrangement 102 comprising the scanning mirror 104; a position sensing detector 106 having a two-dimensional detection surface 108; wherein an x-axis and a y-axis span the two-dimensional detection surface 108; a light source 110 configured to emit a light beam 112 onto the scanning mirror 104 such that the light beam 112 is deflected onto the position sensing detector 106, wherein the position sensing detector 106 is configured to output: a measured position 114 based on the position at which the light beam 112 impinges on the two-dimensional detection surface 108 of the position sensing detector 106, wherein the measured position 114 pertains to a tilt angle 116 of the scanning mirror 104; and a sum signal 115 pertaining to the intensity of the light beam 112; a scan mirror controller 118 configured to drive, using drive parameters 120, the scanning mirror arrangement 102 such that the scanning mirror 104 is tilted in angle in two-dimensions; and a processor 122 being communicatively connected to the scan mirror controller 118 and a memory 123.

In some embodiments, the position sensing detector (PSD) provides an analog output directly proportional to the position at which the light beam impinges on the surface of the PSD. The surface of the PSD may comprise a detector active area arranged such that the light beam impinges on the detector active area. The PSD may further be configured to provide position as well as light intensity. The PSD may be a continuous analog position sensing detector. The PSD may be configured such that a photoelectric current generated by the light beam impinging on the surface of the PSD may flow through the PSD.

The position sensing detector 106 may form a plane. The position sensing detector 106 may have a coordinate system having an x-axis and a y-axis spanning the plane. The y-axis may be orthogonal to the x-axis. A graphical representation of the measured position 114 is illustrated in Figure 1b. In more detail, the position of the light beam 112 on the two-dimensional detection surface 108 of the position sensing detector 106 provides a measured position 114 pertaining to a tilt angle 116 of the scanning mirror 104.

The system 100 may further comprise a set of system parameters 124, a set of control parameters 126 and a set of reference parameters 128. The system parameters 124 may pertain to the performance of the scanning mirror 104 when operated by the scan mirror controller 118. The set of control parameters 128 may comprises parameters for adjusting the operation of the scanning mirror 104, as will be described. The set of determined control parameters 126 may be stored in the memory 123. The set of control parameters 126 may be used to control the scanning mirror 104 of the scan mirror arrangement 102. The determined set of system parameters 126 may be stored in the memory 123. By way of example, the set of system parameters 126 may comprise gains and scaling, PID and filter coefficients, position correction factors and coefficients, operations limits, etc.

The scan mirror controller 118 may be configured to receive the set of control parameters 126 for use in a closed-loop feedback configuration of the scan control system 100. The set of control parameters may be determined in an open-loop feedback configuration of the scan control system 100.

The set of reference parameters 128 may be stored in the memory 123. The set of reference parameters 128 may comprise information pertaining to a set of hardware settings or software settings for the operation and/or characterisation of the scan control system 100. By way of example, the set of reference parameters 128 may comprise a scan coordinate, as set of scan coordinates, a scan patterns, and/or a set length ratio. The determined set of control parameters 126 may be used in a closed-loop feedback configuration 129 of the scan control system 100. A more accurate scanning may be performed. The closed-loop feedback configuration may comprise position feedback.

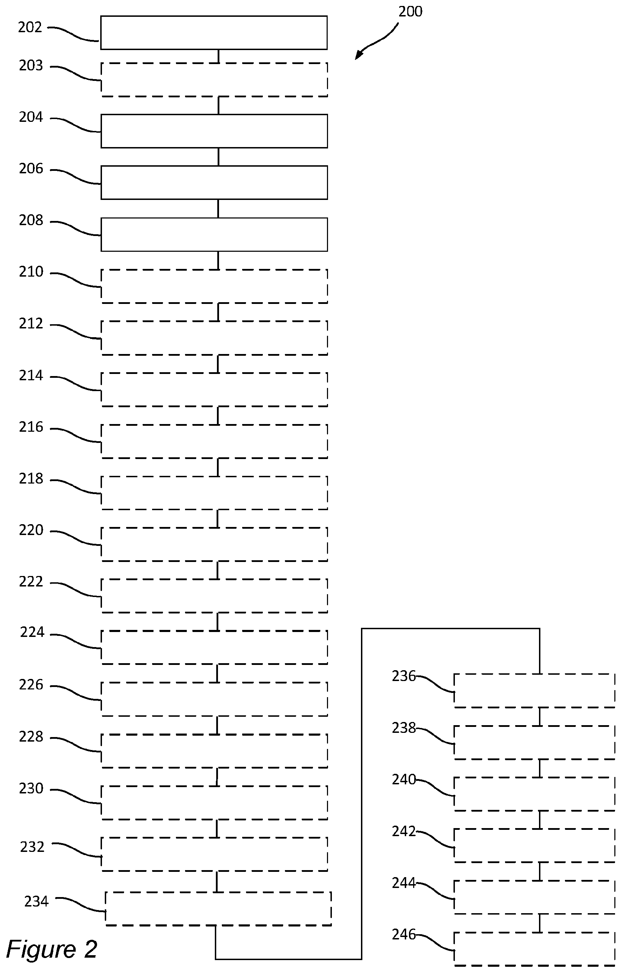

Figure 2 shows a general block diagram showing a method 200 for characterizing a scanning mirror in a scan control system to determine control parameters for use in a closed-loop feedback configuration of the scan control system. With reference to Figures 1 and 2, the method 200 is exemplified according to some embodiments. The method 200 comprises:
driving 202 the scanning mirror 104 using drive parameters 120 while the scan control system 100 is in an open-loop feedback configuration;
determining 204 a set of system parameters 124 pertaining to the performance of the scanning mirror 104 when driven; and
determining 206 a set of control parameters 126 based on the determined set of system parameters 124 and a set of reference parameters 128; and
storing 208 the set of control parameters 126 in the memory 123.

The scanning mirror arrangement may be a micro-electromechanical system (MEMS) scanning mirror arrangement.

The disclosed technology may comprise use of the system as described above for optical coherence tomography, OCT based microscopy.

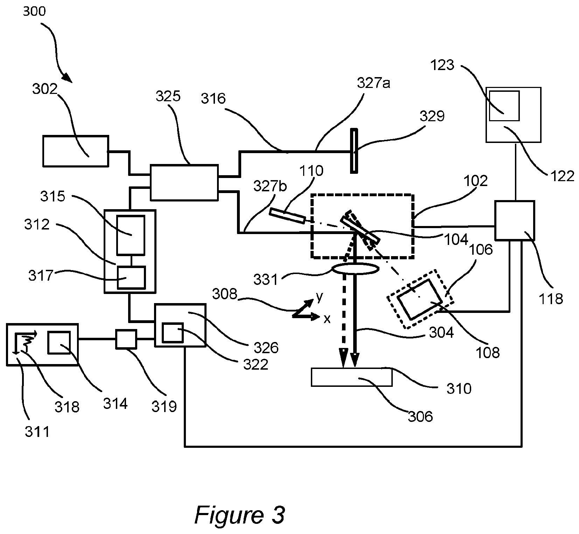

With reference to Figure 3, an optical coherence tomography, OCT, system configured to operate using the scan control system 100 may be provided. The OCT system 300 further comprising:
a sample light source 302 configured to emit a sample light beam 304 onto the scanning mirror 104 such that the sample light beam 304 is deflected onto a sample 306, wherein the scan controller is configured to laterally scan 308 the sample light beam 304 across a surface 310 of the sample 306 using the close-loop position feedback; and an optical detection system 312 configured to detect light reflected back from the sample 306 such that an optical image 314 of the sample 306 is obtained, and a reference light beam 316, wherein the OCT system 300 is configured to generate axially resolved optical information 318 from the sample 306 as the sample light beam 304 is scanned laterally 308 across the sample 306 by using optical path length differences OPLD, between the reference light beam 316 and the sample light beam 304.

In more detail, the light source 110 is arranged such that the light beam 112 is deflected on the scanning mirror at a different incident angle than that of sample light beam 304 used for OCT imaging, and impinge on the surface of the position sensing detector 106 such that the mirror position can be determined.

In more detail, there are two forms of OCT scanning, time-domain OCT (TD-OCT) and spectral domain OCT (SD-OCT). SD-OCT uses spectral interrogation of the spectrum at the OCT interferometer output. Figure 3 schematically shows the principles of operation of an example spectral domain optical coherence tomography, SD-OCT system 100 which some embodiments of the disclosed technology may be used to implement. The SD-OCT system may interchangeable in the following be referred to as an OCT system. The example OCT system 300 shown in Figure 3 according to the disclosed technology may be used to generate optical coherence tomograms of in-vivo tissue samples, such as of a human eye. Figure 3 is schematic only and is drawn not to scale and the position of various components and their relative sizes do not necessarily reflect their relative positions or sizes in embodiments of the disclosed technology.

An example optical image 314 is illustrated in Figure 3 as displayed on a computer display 311 of the OCT system 300. The optical image 314 may comprise a lateral scan (XY-scan) image and an axial scan (z-scan) image.

The example OCT system 300 may use a low coherence broadband optical sample light source 302. The optical detection system 312 may further comprise a spectrometer 315 configured to obtain spectral information and a photodetector arrangement 317 configured to detect light intensity. The OCT system 300 may comprise an image acquisition unit 319. The image acquisition unit 319 may be configured to control the OCT system 300 such that OCT images 314 may be acquired. The OCT system 300 may comprise a processor 322. The processor 322 may form part of a computer system 326. The OCT images 314 may be displayed on the computer display 311 connected to the computer 326. The image acquisition unit 319 may be configured to control, via the scan mirror controller 118, the scanning mirror arrangement 102. The image acquisition unit 319 and/or the computer 326 may be configured to process image data obtained by the optical detection system 310. The image acquisition unit 319 and/or the computer 326 may be connected to the optical detection system 310.

According to other embodiments, the OCT system 300 may comprise more than one processor. By way of example, the processor 122 communicatively connected to the scan mirror controller 118 may be different from the processer 322 connected to the image acquisition unit 319. In other examples, the processors 122 and 322 may be the same processor.

As shown in Figure 3, a suitable broad-beam low coherence sample light source 302 may be used to generate the sample light beam 304 scanning the sample 310. One example broadband sample light source 302 has a central wavelength of 860 nm, with a bandwidth of 100 nm. One or more light sources 302 may be used to provide the broad-band low coherence sample light source over the desired bandwidth. The sample light source 302 may, by way of example, be a broadband light source such as light emitting diode (LED), a super luminescent diode (SLD), or a supercontinuum source.

In more detail, the function of the OCT system is based on interference between the reference light beam 316 and the sample light beam 304. The interference may be understood to be between a reference light beam path and a sample light beam path along which the reference light beam 316 and the sample light beam 304 propagate respectively. Depth information of the sample is obtained by detecting and analysing the interference from backscattered light from different sample depths and light from the reference light beam path. Put differently, OPLD may be used to obtain the depth information along an axial direction of the sample.

By way of example, light from the sample light source 302 may pass through a light coupler 325 which splits the light into the reference beam 316 which follows a reference light beam path 327a and the sample light beam 302 which follows a sample light beam path 327b. The reference light beam path 327a may comprise a reference mirror 329 reflecting the reference light beam 316.

Light returned from the reference light beam path 327a and the sample light beam path 327b may interfere in the coupler 325 to the optical detection system 310. Light from the sample light beam 304 back-scattered or reflected or otherwise returned from the sample 306 may thereby provide optical information pertaining to the sample 306.

In some embodiments, one or more of the reference light beam path 327a or the sample light beam path 327b, may be provided using suitable single-mode optical fibres and/or include one or more sections where a beam following the optical fibre travels in free space. In some embodiments of the disclosed technology, although the optical path lengths of the reference light beam path 327a and sample light beam path 327b are matched, the dispersive properties of the optical fibre each beam travels along may differ to improve the removal of a complex conjugate image from the OCT image 314 output. A variety of other techniques may be used in other embodiments of the disclosed technology to reduce or remove the presence of a complex conjugate image in the OCT image 314 output.

In the example shown schematically in Figure 3 of OCT system 300, the sample light source 302 generates an OCT scanning or sample light beam 304 which illuminates the sample 306 being scanned over a range of wavelengths, and all are measured simultaneously using the spectrometer 315 or other suitable type of interference detector. The spectrometer 315 measures spectral interference from the sample reflected sample light beam 304. In other words, intensity modulations in the returned light as a function of frequency is measured. The rate of variation of intensity over different frequencies may be indicative of the location of the different reflecting layers in the samples.

The sample light beam 304 of the OCT system 300 may be directed via a an objective lens 331 towards a focal point on the sample 306, the focal point being laterally scanned.

The scanning mirror arrangement 102 is exemplified to comprise a scanning mirror arrangement as a micro-electromechanical system (MEMS) based scanning mirror 104. The scanning mirror arrangement 102 may be referred to as a micro-electromechanical system, MEMS, scanning mirror arrangement.

The scanning mirror arrangement may alternatively be a galvanometer-based mirror arrangement.

The OCT system 300 may be incorporated into or attached to a surgical microscope (not shown).

The drive parameters may pertain to drive voltages for deflecting the scanner arrangement. The drive voltages and the deflection may have a linear relationship. The deflection may be understood as a change in tilt angle for the scanning mirror. The drive parameters may pertain to a tilt along the x-axis and/or a tilt along the y-axis. A scanning in two-dimension may thereby be obtained.

The scan mirror controller may be configured to control the drive voltages for the scanning mirror arrangement. Put differently, the scan mirror controller may control the scan operation of the scanning mirror arrangement. The scanning mirror arrangement may deflect the sample light beam from the light source in a first angle range. The scanning mirror arrangement may deflect the sample light beam from the light source in a second angle range. The first and the second angle ranges may be orthogonal. A two-dimensional scan area may thereby be obtained.

The scanning mirror controller may be controlled by a control computer that is configured to synchronize, drive, trigger, store and acquiring image data, and/or performing signal and image processing necessary to obtain image representations of the scanned sample. The control computer may comprise a display arrangement for displaying the image representations.

The light source 110 may, by way of example, be a light emitting diode (LED), or a laser.

According to some examples, the set of reference parameters 128 may comprise a centre position 130 of the position sensing detector 106.

With reference to Figures 1, 2 and 4 the method 200 is exemplified to comprise:
centring 203 the scanning mirror 104 while the scan control system 100 is in the open-loop feedback configuration such that the light beam 116 is deflected to impinge on the centre position 130;
determining 204 the set of system parameters 124 based on the measured position 114 for the light beam 112 on the position sensing detector 106;
determining 206 the set of control parameters 126 based on a light beam offset 132 between the measured position 114 and the centre position 130.

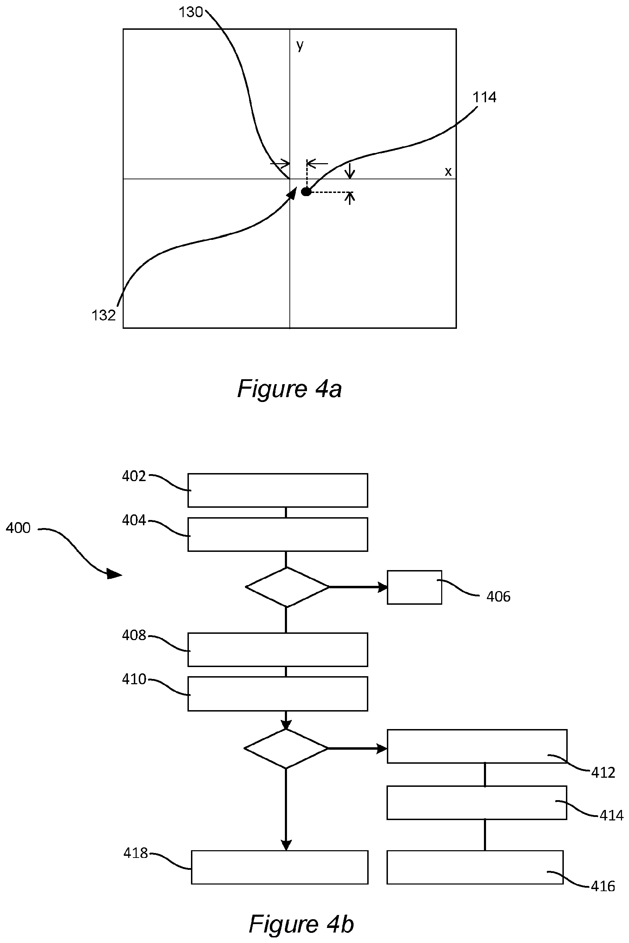

In more detail, Figure 4 illustrates a representation of the measured position 114 for the light beam 112 on the position sensing detector 106 and centre position 130. The x-axis is orthogonal to the y-axis. The measured position 114 has an x-coordinate along the x-axis and the y-coordinate along the y-axis, as illustrated by the dashed lines in Figure 4. The x-axis and y-axis may be aligned with the physical edges of the surface of the PSD, respectively. In other words, the scanning mirror origin may be understood as reference parameter, i.e. the centre position. Put differently, the centre position may be the position at which the drive parameters (e.g. voltages) are set to zero, i.e. a zero position. The measured light beam offset may be subtracted from subsequently measured positions. To this end, the raw PSD position outputs may have an offset, but the method allows for a subtraction of the offset for each given position. Subsequent method steps may therefore use a shifted centre position. Put differently the offset is subtracted from the positions measured at the PSD to align the scanning mirror position origin and the PSD origin. The wording centring may be understood as a driving of the scanning mirror. The centring may be achieved by setting the drive parameters to zero voltages.

In Figure 4a, the light beam offset 132 between the measured position 114 and the centre position 130 is illustrated. The light beam offset 132 may have an offset in along the x-axis and/or along the y-axis, see the pairs of arrows in Figure 4a. Based on a light beam offset 132 between the measured position 114 and the centre position 130 the set of control parameters 126 may be determined 206. The set of control parameters 126 may be stored in the memory 123. The set of control parameters may comprise offset values pertaining to a translation of the light beam offset.

To this end, the method 200 may in some embodiments, further comprise: adjusting 210 using the set of control parameters 126 the drive parameters 120 for the scan mirror controller 118 such that the scanning mirror 104 is tilted and the light beam 112 is deflected to impinge on the centre position 130. An alignment of the light beam may thereby be obtained.

In Figure 4b, a flow chart illustrating characterization of the light beam offset 132 as described in connection with Figure 4a is exemplified. In more detail, the characterization of the scanning mirror may be obtained in an open-loop feedback configuration of the scan control system 100. The determined set of control parameters and/or the determine light beam offset may be used in a closed-loop feedback configuration of the scan control system. The flow chart 400 comprises:
enabling 402 the light source 110 such the light beam 112 is emitted;
measuring 404 the sum signal 115;
   if the sum signal 115 is at or below a threshold value broadcast 406 an error signal; and
   if the sum signal 115 is above a threshold value,
centring 408 the scanning mirror 104 while the scan control system 100 is in the open-loop feedback configuration such that the light beam 116 is deflected to impinge on the centre position 130 and determining 410 the measured position 114;
   if the measured position 114 differ from the centre position 130 above a threshold value, determining 412 a set of system parameters 124 based a light beam offset 132 pertaining to an offset between the measured position 114 and the centre position 130,
and determining 414 a set of control parameters 126 based on a light beam offset 132 between the measured position 114 and the centre position 130, and
saving 416 the set of control parameters in the memory 123, wherein the set of control parameters comprises offset values pertaining to an offset along the x-axis and an offset along the y-axis; and
if the measured position 114 is equal to or differ from the centre position 130 below a threshold value, saving 418 the measured position in the memory 123.

The method 200 may further comprise:
determining 204 the set of system parameters 124 based on sum signal 115; and
storing 208 the sum signal 115 in the memory 123.

The determining 204 of the set of system parameters 124 may be based on the measured position 114 comprises calculating the x-coordinate and the y-coordinate using respective equation: $x = \frac{\left({X}_{2}+{Y}_{1}\right) - \left({X}_{1}+{Y}_{2}\right)}{\left({X}_{1}+{X}_{2}+{Y}_{1}+{Y}_{2}\right)} \times \frac{Lx}{2} and y = \frac{\left({X}_{2}+{Y}_{2}\right) - \left({X}_{1}+{Y}_{1}\right)}{\left({X}_{1}+{X}_{2}+{Y}_{1}+{Y}_{2}\right)} \times \frac{Ly}{2}$ , wherein X₁, X₂, Y₁, and Y₂ are current levels measured at the edges of the position sensing device, *Lx* and *Ly* are the respective widths of the two-dimensional detection surface 108, and wherein (*X*₁ *+ X*₂ *+ Y*₁ *+ Y*₂) is the sum signal 115. An advantage being that the detected position is normalized such that the measured position is independent of the intensity of the light beam.

In some embodiments, the method 200 may comprise:
centring 212 using drive parameters from the scan mirror controller 118 the scanning mirror 104 such that the light beam 112 is deflected to impinge on the centre position 130 of the position sensing detector 106;
determining 214 the sum signal 115 at the centre position 130; and
if the sum signal 115 has an intensity value being at least that of a first threshold intensity value:
   driving 216 using drive parameters from the scan mirror controller 118 to tilt the scanning mirror 104 such that the light beam 112 is deflected to impinge on the position sensing detector 106 at a first start position 134, the first start position 134 having a minimum x-coordinate and a minimum y-coordinate;
   determining 218 the measured position 114 for the light beam 112 pertaining to the first start position 134 and storing 220 the measured position 114 in the memory 123; and
   determining 222 the sum signal 115 at the first start position 134; and
   if the sum signal 115 has an intensity value at least that of a second threshold intensity value:
      adjusting 224 the tilt of the scanning mirror 104 using drive parameters such that the light beam 112 is moved to other x-coordinates along the x-axis; and
      determining 226 the sum signal 115 for each of the other x-coordinates, wherein the adjusting 228 is iterated while the sum signal 115 has intensity value of at least that of a third threshold intensity value, up to a first end position 136 having a maximum x-coordinate; wherein the minimum y-coordinate is held constant during the adjusting 224 such that a first scan line 138 is obtained on the position sensing detector 106;
      driving 228 using drive parameters from the scan mirror controller 118 to tilt the scanning mirror 104 such that the light beam 112 is deflected to impinge on the position sensing detector 106 at a second start position 140, the second start position 140 having a minimum x-coordinate and a maximum y-coordinate;
      determining 230 the measured position 114 for the light beam 112 pertaining to the second start position 140 and storing 232 the measured position 114 in the memory 123; and
      determining 234 the sum signal 115 at the second start position 140; and
      if the sum signal 115 has an intensity value at least that of a fourth threshold intensity value:
         adjusting 236 the tilt of the scanning mirror 104 using drive parameters such that the light beam 112 is moved to other x-coordinates along the x-axis; and
         determining 238 the sum signal 115 for each of the other x-coordinates, wherein the adjusting 236 is iterated while the sum signal 115 has intensity value of at least that of a fifth threshold intensity value, up to a second end position 142 having a maximum x-coordinate; wherein the maximum y-coordinate is held constant during the adjusting 236 such that a second scan line 144 is obtained on the position sensing detector 106.

An efficient alignment procedure may thereby be provided.

In some embodiments, the driving 212 the scanning mirror 104 may be achieved using the set of control parameters 126 based on the light beam offset 132.

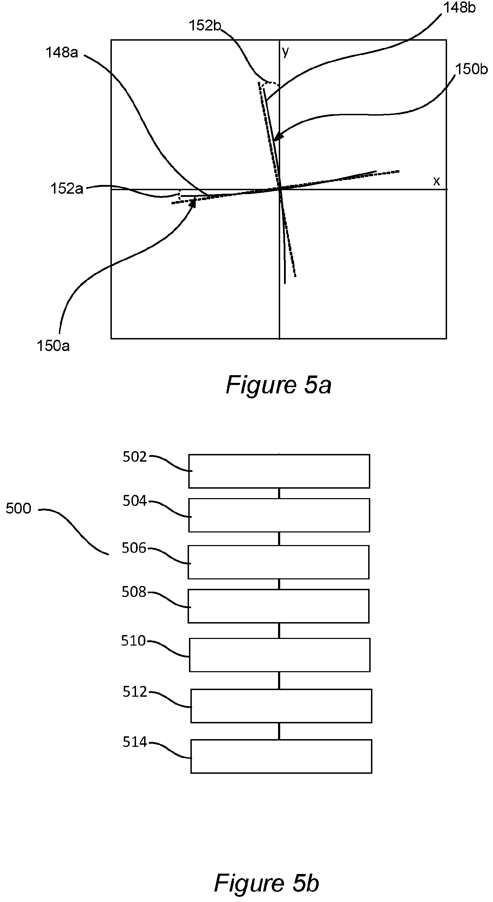

In some embodiments, the method 200 may comprise characterizing a rotational direction of the scanning mirror 104. With reference to Figures 1, 2 and 5a, the method may comprise:
driving 202 using a first set of drive parameters from the scan mirror controller 118 to scan the scanning mirror 104 such that the light beam 112 is scanned across the two-dimensional detection surface 108 of the position sensing detector 106 thereby forming a third scan line 148a, wherein the third scan line 148a is along the x-axis of the two-dimensional detection surface 108, see Figure 5a. The method 200 further comprising determining 204 the set of system parameters 124 based on a first set of measured positions 150a for the third scan line 148a and determining 206 the set of control parameters 126 based on a first rotational deviation value 152a for the first set of measured positions 150a relative to the x-axis using a mathematical model. The first rotational deviation value 152a may be an angle.

In some embodiments, the method 200 may comprise characterizing a rotational direction of the scanning mirror 104 by:
driving 202 using a second set of drive parameters from the scan mirror controller 118 to scan the scanning mirror 104 such that the light beam 112 is scanned across the two-dimensional detection surface 108 of the position sensing detector 106 thereby forming a fourth scan line 148b, wherein the fourth scan line 148b is along the y-axis of the two-dimensional detection surface 108;
determining 204 the set of system parameters 124 based on a second set of measured positions 150b for the fourth scan line 148b;
determining 206 the set of control parameters 126 based on a second rotational deviation value 152b for the second set of measured positions 150b relative to the y-axis using a mathematical model.

In some embodiments, the method 200 comprises performing a linear curve fit, illustrated by the dashed lines in Figure 5a, to at least one of the first and the second set of measured positions 150a, 150b to determine the first and the second rotational deviation value 152a, 152b, respectively. An average rotational deviation value may be obtained by averaging the first rotational and the second deviation values.

In some embodiments, the position sensing detector may form a plane and has a coordinate system having an x-axis and a y-axis spanning the plane. The x-axis and y-axis may be orthogonal. The x-axis and y-axis may be aligned with the physical edges of the surface of the PSD, respectively.

In some embodiments, the mathematical model may be of the form: $θ = {sin}^{- 1} \left(\frac{Δ x}{r}\right) θ = {sin}^{- 1} \left(\frac{Δ y}{r}\right)$
, where *Θ* is a rotational angle, *r* is the radius, Δ*x* and Δ*y* are the rotational deviation values relative to the x-axis and y-axis, respectively, and wherein the set of control parameters (126) are based on the transformation: $\left[\begin{matrix}x \\ y\end{matrix}\right] = \left[\begin{matrix}cos \left(θ\right) & sin \left(θ\right) \\ - sin \left(θ\right) & cos \left(θ\right)\end{matrix}\right] \left[\begin{matrix}x ′ \\ y ′\end{matrix}\right]$
, where *Θ* is the rotational angle, x' and *y*' are the measured positions and x and y are compensated positions after using the transformation.

In Figure 5b, a flow chart illustrating characterizing a rotational direction of the scanning mirror as described in connection with Figure 5a is exemplified. In more detail, the characterization of the scanning mirror may be obtained in an open-loop feedback configuration of the scan control system. The determined set of control parameters and/or the determined rotational deviation values may be used in a closed-loop feedback configuration of the scan control system. The flow chart 500 comprises:
scanning 502 incrementally the scanning mirror, by tilting the scanning mirror across a scan range in tilt angle along the y-axis in defined steps such that the light beam is scanned across the position sensing detector, PSD, along the y-axis; and
recording 504 for each scan position of the light beam a set of measured positions at the PSD, the measured positions comprising an x-coordinate along the x-axis and a y-coordinate along the y-axis; and
scanning 506 incrementally the scanning mirror, by tilting the scanning mirror across a scan range in tilt angle in defined steps such that the light beam is scanned across the position sensing detector, PSD, along the x-axis; and
recording 508 for each scan position of the light beam a set of measured positions at the PSD, the measured positions comprising an x-coordinate along the x-axis and a y-coordinate along the y-axis.

The flow chart 500 further comprising:
applying 510 a linear curve fit to the measured positions along the y-axis and x-axis, respectively;
determining 512 rotational deviation values for the respective set of measured positions based on the linear curve fits relative to the x-axis and the y-axis, respectively;
storing 514 at least one rotational deviation value in a memory.

In some embodiments, rotational deviation value is an average rotational deviation value calculated from the determined rotational deviation values.

In some embodiments, the light beam is scanned 502 across the position sensing detector, PSD, along the y-axis while keeping the x coordinate at zero.

In some embodiments, the light beam is scanned 506 across the position sensing detector, PSD, along the x-axis while keeping the y coordinate at zero.

In some embodiments, the scan range pertains to a range between a minimum and a maximum tilt angle or vice versa for the scanning mirror.

In some embodiments, the scan range pertains to a range between a minimum and a maximum position value on the PSD.

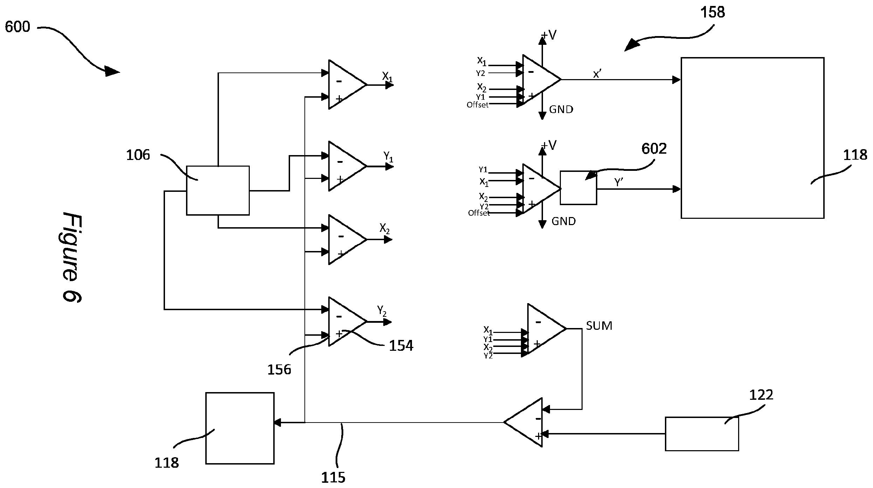

Figure 6 illustrates, by way of example, amplification electronics 600 for a scan control system according to some embodiments. The amplification electronics 300 may allow for signal conditioning to be performed in an analog front-end of a position detection circuit pertaining to the position sensing detector. With reference to Figure 6, the system 100 may in some examples, comprise an amplifier 154 configured to amplify a current generated as the light beam 112 impinge on the two-dimensional detection surface 108 of the position sensing detector 106. In Figure 6 a number of amplifiers are illustrated, each corresponding to one of the X₁, X₂, Y₁, and Y₂ current levels measured at the edges of the position sensing device pertaining to a measured position as described above.

The amplifier 154 has an offset input 156. With reference to Figures 1, 2 and 6, the method 200 may comprise:
determining 204 for each measured position 114, the set of system parameters 124 based on the sum signal 115; and
determining 206 the set of control parameters 126 comprising the sum signal 115 as an offset signal such that the output current from the amplifier 154 is held at a mid-scale value for each measured position 114.
The method 200 may further comprise adjusting 240 the intensity of the light beam 112 such that the sum signal 115 is held constant whereby an amplification gain for the amplifier 154 is held within an amplification range.

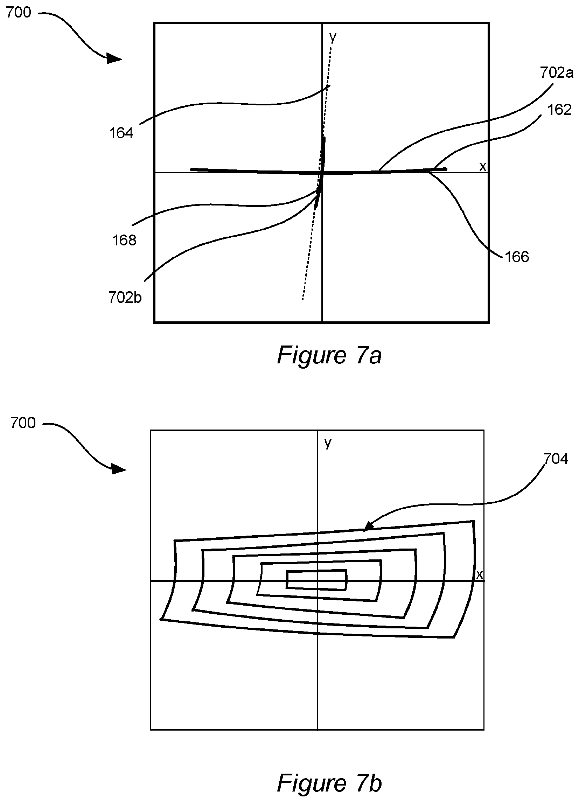

Figure 7 illustrates, by way of example, characterization of a scanning mirror according to some embodiments. With reference to Figures 7a and 7b, examples of optical distortions caused a compound angle projection of the light beam on the position sensing detector are illustrated.

Put differently, the extent of a projected light beam scanned a given distance on the position sensing detector may vary in length along different directions of the position sensing detector. The effect is caused by the compound angle effect of the scanning mirror motion and the magnitude of the variation may depend on the angle of incident for the light beam on the scanning mirror. By way of example, the projected y-axis motion on the position sensing device may be shorter than the projected x-axis motion. Figure 7 illustrates graphical representations 700 of the resulting distortion using optical modeling with an angle of incident of 67.5° for two scan lines 702a, 702b, see Figure 7a, and a number of scan patterns 704, see Figure 7b.

By way of example, the scanning mirror may be a MEMS mirror Figure 7 illustrates the curvature for two orthogonal scan lines 702a, 702b along the x-axis and the y-axis, respectively. The curvature may be caused by a compound angle projection of the light beam on the position sensing detector. The scan lines 702a and 702b where obtained in an open-loop feedback configuration of the scan control system 100. The scan line 702b is shorter in length than the scan line 702a. Put differently, Figure 7 depicts the short projection in y-axis compared to the x-axis for an equal MEMS scanning mirror deflection in x- and y-directions.

To address this, the method 200 may comprise a compensation for the short axis by an analog circuit arranged before a digitization phase interface of the scan mirror controller. In more detail, the system 100 further comprises an amplification circuit 158, see Figure 6, configured to amplify signals pertaining to measured positions 114 from the position sensing device 106 and to send the amplified signals to the scan mirror controller 118. With reference to Figures 1, 2, 6, and 7, the method 200 comprises:
driving 242 using a fifth set of drive parameters 160 from the scan mirror controller 118 to scan the scanning mirror 104 such that the light beam 112 is scanned a first distance 162 along the x-axis and a second distance 164, see dashed line in Figure 7a, along the y-axis, wherein the first and the second distances 162,164 have a set length ratio. Put differently the first and the second length may have desired lengths. The set length ratio is here exemplified as 1. The method 200 further comprises, determining 204 the set of system parameters 124 based on a third and a fourth set of measured positions 166, 168 pertaining to the first and the second scan distances 162, 164, respectively; and
determining 206 the set of control parameters 126 based a measured length ratio for the third and fourth set of measured positions 166, 168, wherein the control parameters 126 comprises an amplification adjustment factor 602 for the amplification circuit 158 such that a difference between the measured length ratio and the set length ratio is compensated for. By way of example, the amplification adjustment factor 602 may be 3 to compensate for the length difference between the scan lines 702a and 702b.

The closed-loop scan control system may be equipped with an overdrive protection mechanism to prevent the scanning mirror from damage in case of instability. The scanning mirror may be a MEMS mirror. The instability may occur due to a failure that results in positive feedback or unintended feedback that drives the MEMS beyond its safe operating limits. The protection mechanism operates by implementing a high-pass filter to detect motion near the scanning mirror resonance. If detected position goes beyond the max safe limit, the system may comprise a shutdown logic configured to disable the drive output at the scan mirror controller to protect the scanning mirror.

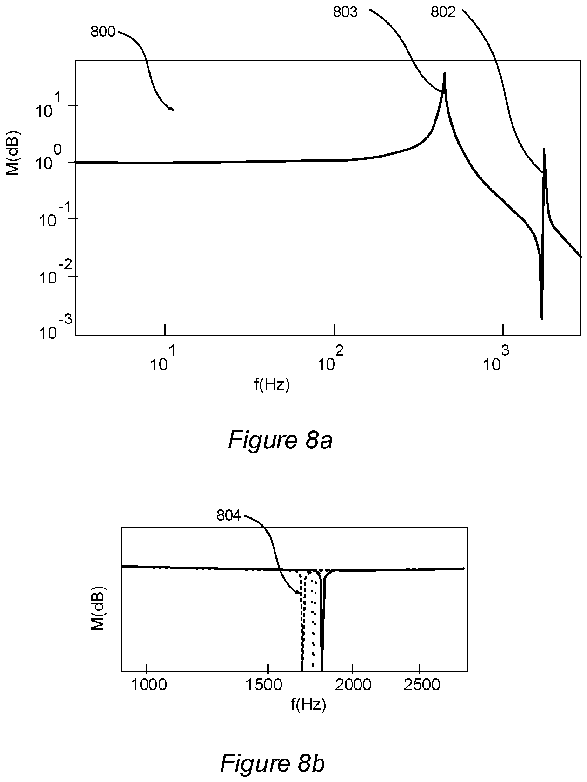

Figure 8 illustrates, by way of example, characterization of a scanning mirror according to some embodiments. With reference to Figures 1, 2 and 8, the system 100 further comprises a signal generator arrangement 170 configured to drive the scanning mirror 104 at a range of drive frequencies and to determine a frequency response amplitude for each of the drive frequencies, see Figure 8a. The scan control system 100 may further comprise a set of notch filters 172 each configured to attenuate a frequency band around a central frequency, see Figure 8b. The method 200 may comprise:
driving 244, by the signal generator arrangement 170, the scanning mirror 104 over a range of drive frequencies;
determining 246 frequency response amplitudes for the scanning mirror 104 for each drive frequency to identify a resonance frequency 802;
determining 204 the set of system parameters 124 based on a matching of a centre frequency of one of the set of notch filters 172 to the identified resonance frequency 802; and
determining 206 the set of control parameters 126 based on the matched centre frequency, thereby allowing for use of the notch filter 172 having the matched centre frequency in a closed-loop feedback configuration of the scan control system.

Figure 8a illustrates by way of example a sweep 800 in frequency to determine a magnitude (M) of the scanning mirror response, e.g. the deflection amplitude as function of frequency. A determined resonance frequency 802 for a MEMS scanning mirror is illustrated in Figure 8a. By way of example, the peak 803 shown in Figure 8a, about 500 Hz, is the primary resonance of the MEMS which may be controlled by the closed-loop scan control system. The resonance frequency 802 may occur above 1000 Hz. By way of example, the resonance frequency 802 may occur in the range of 1500 to 2000 Hz, preferably in the range 1700 Hz to 2000 Hz. The resonance frequency 802 may be supressed by the method. Put differently, by the use of the matched notch filter the resonance at the resonance frequency 802 may be supressed.

By way of example, the application of the notch filter may prevent the excitation of the bonded mirror on the MEMS structure. The bonded MEMS mirror resonance is not typically controllable since there is no direct actuation control input to the bonded mirror. The method is to apply a notch filter at the frequency of bonded mirror excitation frequency. This may be achieved by applying an infinite impulse response (IIR) filter. The notch filter may be a digital notch filter. The scan mirror controller may have a series of onboard coefficients for notch filter with varying centre frequency. During the controller power up, a pre-identified matching notch filter may be selected to be apply during runtime of the scan mirror controller.

In more detail, MEMS scanning mirrors may be a bonded mirror having a resonance, typically much higher frequency than the MEMS structural resonance. This mode of resonance can be problematic in a close-loop application with a large operational bandwidth. The bonded mirror is not controllable since there is no direct way to drive and dampen the resonance. This may be solved by the method 200, as described, by preventing excitation of the bonded mirror by applying a narrow notch filter around the bonded mirror resonance. The bonded mirror resonance can vary from device to device. Therefore, the notch filter centre frequency must be customized and set for each device.

By way of example, the scan control system may comprise software including a series of IIR notch filter coefficients that can be indexed allowing for a selection of notch filter having a centre frequency matching that of the MEMS mirror. Figure 8b illustrate a number of notch filters 804 having different central frequencies. Each of the notch filters providing as a bandstop filter with a narrow stopband.

In some embodiments, the method for determining the selection of notch filter comprises driving the MEMS in open loop with a sinusoidal sweep in the frequency range of the bonded mirror resonance and capturing the frequency at which the amplitude peaks. This may be achieved by sing an onboard frequency generator and FFT function. The identified resonance frequency may be matched with the closest notch filter centre frequency and the index is selected as part of the tuning parameter.

According to some examples, the closed-loop scan control system comprises a Proportional Integral Derivative Compensation (PID) controller. The PID controller enables signal processing with tunable parameters for creating best performance. The parameter values are determined during tuning phase of the controller.

The scan control system may be equipped with the ability to collect samples for performance monitoring and diagnostics. Onboard real-time sample collection may provide the ability to perform FFT and signal capture used for automatic tuning and characterization of the system behavior. The collected sample routing to a desired destination is controlled under software and diagnostic or tuning mode selected.

According to an aspect of this disclosure a Computer program with a program code for performing the method 200 when the computer program is run on a processor is provided.

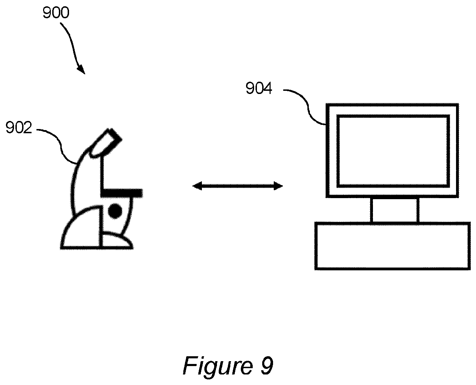

Some embodiments relate to a microscope comprising a system as described in connection with one or more of the Figures 1 to 8. Alternatively, a microscope may be part of or connected to a system as described in connection with one or more of the Figures 1 to 8. Figure 9 shows a schematic illustration of a system 900 configured to perform a method described herein. The system 900 comprises a microscope 902 and a computer system 904. The microscope 902 is configured to take images and is connected to the computer system 904. The computer system 904 is configured to execute at least a part of a method described herein. The computer system 904 may be configured to execute a machine learning algorithm. The computer system 904 and microscope 902 may be separate entities but can also be integrated together in one common housing. The computer system 904 may be part of a central processing system of the microscope 902 and/or the computer system 904 may be part of a subcomponent of the microscope 902, such as a sensor, an actor, a camera or an illumination unit, etc. of the microscope 902. The computer system 904 may be the computer system 326 described in relation to Figure 3.

The computer system 904 may comprise the image acquisition unit described above. The computer system 904 may comprise a processor described above.

The computer system 904 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 904 may comprise any circuit or combination of circuits. In one embodiment, the computer system 904 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 904 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 904 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 904 may also include a display device, one or more speakers, and a keyboard and/or controller, which can include a mouse, trackball, touch screen, voice-recognition device, or any other device that permits a system user to input information into and receive information from the computer system 904.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the disclosure can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Generally, embodiments of the present disclosure can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code to cause the scan control system described herein to perform one of the methods described herein, when the computer program runs on a computer.

A further embodiment of the present disclosure is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present disclosure is an apparatus as described herein comprising a processor and the storage medium.

A further embodiment of the disclosure is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the disclosure comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure as long as they fall under the scope of the appended claims. In the drawings and specification, there have been disclosed aspects for purposes of illustration only and not for purposes of limitation, the scope of the inventive concepts being set forth in the following claims.

## Claims

1. A method for characterizing a scanning mirror in a scan control system to determine control parameters for use in a closed-loop feedback configuration of the scan control system, the system (100) comprising:
a scanning mirror arrangement (102) comprising the scanning mirror (104);
a position sensing detector (106) having a two-dimensional detection surface (108); wherein an x-axis and a y-axis span the two-dimensional detection surface (108);
a light source (110) configured to emit a light beam (112) onto the scanning mirror (104) such that the light beam (112) is deflected onto the position sensing detector (106), wherein the position sensing detector (106) is configured to output:
a measured position (114) based on the position at which the light beam (112) impinges on the two-dimensional detection surface (108) of the position sensing detector (106), wherein the measured position (114) pertains to a tilt angle (116) of the scanning mirror (104); and
a sum signal (115) pertaining to the intensity of the light beam (112);
a scan mirror controller (118) configured to drive, using drive parameters (120), the scanning mirror arrangement (102) such that the scanning mirror (104) is tilted in angle in two-dimensions; and
a processor (122) being communicatively connected to the scan mirror controller (118) and a memory (123);
wherein the method (200) comprises:
driving (202) the scanning mirror (104) using drive parameters (120) while the scan control system (100) is in an open-loop feedback configuration;
determining (204) a set of system parameters (124) pertaining to the performance of the scanning mirror (104) when driven; and
determining (206) a set of control parameters (126) based on the determined set of system parameters (124) and a set of reference parameters (128); and
storing (208) the set of control parameters (126) in the memory (123);
wherein the set of reference parameters (128) comprises a centre position (130) of the position sensing detector (106) and;
wherein the method comprises centring (203) the scanning mirror (104) while the scan control system (100) is in an open-loop feedback configuration such that the light beam (116) is deflected to impinge on the centre position (130).

2. The method according to claim 1, further comprising:
determining (204) the set of system parameters (124) based on the measured position (114) for the light beam (112) on the position sensing detector (106);
determining (206) the set of control parameters (126) based on a light beam offset (132) between the measured position (114) and the centre position (130).

3. The method according to claim 1 or 2, wherein:
the method (200) further comprises determining (204) the set of system parameters (124) based on sum signal (115) and storing (208) the sum signal (115) in the memory (123); and/or
the x-axis is orthogonal to the y-axis.

4. The method according to any one of claims 1 to 3, wherein the measured position (114) has an x-coordinate along the x-axis and the y-coordinate along the y-axis;
wherein, optionally, the determining (204) the set of system parameters (124) based on the measured position (114) comprises calculating the x-coordinate and the y-coordinate using respective equation: $x = \frac{\left({X}_{2}+{Y}_{1}\right) - \left({X}_{1}+{Y}_{2}\right)}{\left({X}_{1}+{X}_{2}+{Y}_{1}+{Y}_{2}\right)} \times \frac{Lx}{2} and y = \frac{\left({X}_{2}+{Y}_{2}\right) - \left({X}_{1}+{Y}_{1}\right)}{\left({X}_{1}+{X}_{2}+{Y}_{1}+{Y}_{2}\right)} \times \frac{Ly}{2}$
, wherein X₁, X₂, Y₁, and Y₂ are current levels measured at the edges of the position sensing device, *Lx* and *Ly* are the respective widths of the two-dimensional detection surface (108), and wherein (*X*₁ *+ X*₂ *+ Y*₁ *+ Y*₂) is the sum signal (115).

5. The method according to any one of claims 1 to 4, wherein the method (200) comprises:
centring (212) using drive parameters from the scan mirror controller (118) the scanning mirror (104) such that the light beam (112) is deflected to impinge on the centre position (130) of the position sensing detector (106);
determining (214) the sum signal (115) at the centre position (130); and
if the sum signal (115) has an intensity value being at least that of a first threshold intensity value:
driving (216) using drive parameters from the scan mirror controller (118) to tilt the scanning mirror (104) such that the light beam (112) is deflected to impinge on the position sensing detector (106) at a first start position (134), the first start position (134) having a minimum x-coordinate and a minimum y-coordinate;
determining (218) the measured position (114) for the light beam (112) pertaining to the first start position (134) and storing (220) the measured position (114) in the memory (123); and
determining (222) the sum signal (115) at the first start position (134); and
if the sum signal (115) has an intensity value at least that of a second threshold intensity value:
adjusting (224) the tilt of the scanning mirror (104) using drive parameters such that the light beam (112) is moved to other x-coordinates along the x-axis; and
determining (226) the sum signal (115) for each of the other x-coordinates, wherein the adjusting (228) is iterated while the sum signal (115) has intensity value of at least that of a third threshold intensity value, up to a first end position (136) having a maximum x-coordinate; wherein the minimum y-coordinate is held constant during the adjusting (224) such that a first scan line (138) is obtained on the position sensing detector (106);
driving (228) using drive parameters from the scan mirror controller (118) to tilt the scanning mirror (104) such that the light beam (112) is deflected to impinge on the position sensing detector (106) at a second start position (140), the second start position (140) having a minimum x-coordinate and a maximum y-coordinate;
determining (230) the measured position (114) for the light beam (112) pertaining to the second start position (140) and storing (232) the measured position (114) in the memory (123); and
determining (234) the sum signal (115) at the second start position (140); and
if the sum signal (115) has an intensity value at least that of a fourth threshold intensity value:
adjusting (236) the tilt of the scanning mirror (104) using drive parameters such that the light beam (112) is moved to other x-coordinates along the x-axis; and
determining (238) the sum signal (115) for each of the other x-coordinates, wherein the adjusting (236) is iterated while the sum signal (115) has intensity value of at least that of a fifth threshold intensity value, up to a second end position (142) having a maximum x-coordinate; wherein the maximum y-coordinate is held constant during the adjusting (236) such that a second scan line (144) is obtained on the position sensing detector (106).

6. The method according to any one of claims 1 to 5, the method (200) comprising characterizing a rotational direction of the scanning mirror (104) by:
driving (202) using a first set of drive parameters from the scan mirror controller (118) to scan the scanning mirror (104) such that the light beam (112) is scanned across the two-dimensional detection surface (108) of the position sensing detector (106) thereby forming a third scan line (148a), wherein the third scan line (148a) is along the x-axis of the two-dimensional detection surface (108);
determining (204) the set of system parameters (124) based on a first set of measured positions (150a) for the third scan line (148a);
determining (206) the set of control parameters (126) based on a first rotational deviation value (152a) for the first set of measured positions (150a) relative to the x-axis using a mathematical model.

7. The method according to any one of claims 1 to 6, the method (200) comprising characterizing a rotational direction of the scanning mirror (104) by:
driving (202) using a second set of drive parameters from the scan mirror controller (118) to scan the scanning mirror (104) such that the light beam (112) is scanned across the two-dimensional detection surface (108) of the position sensing detector (106) thereby forming a fourth scan line (148b), wherein the fourth scan line (148b) is along the y-axis of the two-dimensional detection surface (108);
determining (204) the set of system parameters (124) based on a second set of measured positions (150b) for the fourth scan line (148b);
determining (206) the set of control parameters (126) based on a second rotational deviation value (152b) for the second set of measured positions (150b) relative to the y-axis using a mathematical model.

8. The method according to claim 6 or 7, wherein the method (200) comprises performing a linear curve fit to at least one of the first and the second set of measured positions (150a, 150b) to determine the first and the second rotational deviation value (152a, 152b), respectively.

9. The method according to any one of claims 6 or 8, wherein the mathematical model is of the form: $θ = {sin}^{- 1} \left(\frac{Δ x}{r}\right) θ = {sin}^{- 1} \left(\frac{Δ y}{r}\right)$
, where *Θ* is a rotational angle, *r* is the radius, Δ*x* and Δ*y* are the rotational deviation values relative to the x-axis and y-axis, respectively and wherein the set of control parameters (126) are based on the transformation: $\left[\begin{matrix}x \\ y\end{matrix}\right] = \left[\begin{matrix}cos \left(θ\right) & sin \left(θ\right) \\ - sin \left(θ\right) & cos \left(θ\right)\end{matrix}\right] \left[\begin{matrix}x ′ \\ y ′\end{matrix}\right]$
, where *Θ* is the rotational angle, *x'* and *y'* are the measured positions and x and y are compensated positions after using the transformation.

10. The method according to any one of claims 1 to 9, wherein the system (100) further comprises an amplifier (154) configured to amplify a current generated as the light beam (112) impinge on the two-dimensional detection surface (108) of the position sensing detector (106), the amplifier (154) having an offset input (156), wherein the method (200) comprises:
determining (204) for each measured position (114), the set of system parameters (124) based on the sum signal (115); and
determining (206) the set of control parameters (126) comprising the sum signal (115) as an offset signal such that the output current from the amplifier (154) is held at a mid-scale value for each measured position (114);
wherein, optionally, the method further comprises adjusting (240) the intensity of the light beam (112) such that the sum signal (115) is held constant whereby an amplification gain for the amplifier (154) is held within an amplification range.

11. The method according to any one of claims 1 to 10, wherein the system (100) further comprises an amplification circuit (158) configured to amplify signals pertaining to measured positions (114) from the position sensing device (106) and to send the amplified signals to the scan mirror controller (118), the method (200) comprises:
driving (242) using a fifth set of drive parameters (160) from the scan mirror controller (118) to scan the scanning mirror (104) such that the light beam (112) is scanned a first distance (162) along the x-axis and a second distance (164) along the y-axis, wherein the first and the second distances (160,162) have a set length ratio;
determining (204) the set of system parameters (124) based on a third and a fourth set of measured positions (166, 168) pertaining to the first and the second scan distances (162, 164), respectively; and
determining (206) the set of control parameters (126) based a measured length ratio for the third and fourth set of measured positions (166, 168), wherein the control parameters (126) comprises an amplification adjustment factor for the amplification circuit (158) such that a difference between the measured length ratio and the set length ratio is compensated for.

12. The method according to any one of claims 1 to 11, wherein the system (100) further comprises a signal generator arrangement (170) configured to drive the scanning mirror (104) at a range of drive frequencies and to determine a frequency response amplitude for each of the drive frequencies, and a set of notch filters (172) each configured to attenuate a frequency band around a central frequency, wherein the method (200) comprises:
driving (244), by the signal generator arrangement (170), the scanning mirror (104) over a range of drive frequencies;
determining (246) frequency response amplitudes for the scanning mirror (104) for each drive frequency to identify a resonance frequency (174);
determining (204) the set of system parameters (124) based on a matching of a centre frequency of one of the set of notch filters (172) to the identified resonance frequency (174); and
determining (206) the set of control parameters (126) based on the matched centre frequency, thereby allowing for use of the notch filter (172) having the matched centre frequency in a closed-loop feedback configuration of the scan control system.

13. A scan control system being arranged to perform the method (200) according to any one of claims 1 to 12, the system (100) comprising:
a scanning mirror arrangement (102) comprising the scanning mirror (104);
a position sensing detector (106) having a two-dimensional detection surface (108);
a light source (110) configured to emit a light beam (112) onto the scanning mirror (104) such that the light beam (112) is deflected onto the position sensing detector (106), wherein the position sensing detector (106) is configured to output a measured position (114) based on the position at which the light beam (112) impinges on the two-dimensional detection surface (108) of the position sensing detector (106), the measured position (114) pertaining to a tilt angle (116) of the scanning mirror (104);
a scan mirror controller (118) configured to drive, using drive parameters (120), the scanning mirror arrangement (102) such that the scanning mirror (104) is tilted in angle in two-dimensions; and
a processor (122) communicatively connected to the scan mirror controller (118), wherein the scan mirror controller (118) is configured to receive a set of control parameters (126) for use in a closed-loop feedback configuration of the scan control system.

14. An optical coherence tomography, OCT, system configured to operate using the scan control system (100) according to claim 16, the OCT system (300) further comprising:
a sample light source (302) configured to emit a sample light beam (304) onto the scanning mirror (104) such that the sample light beam (304) is deflected onto a sample (306), wherein the scan controller is configured to laterally scan (308) the sample light beam (304) across a surface (310) of the sample (306) using the close-loop position feedback; and
an optical detection system (312) configured to detect light reflected back from the sample (306) such that an optical image (314) of the sample (306) is obtained, and a reference light beam (316), wherein the OCT system (300) is configured to generate axially resolved optical information (318) from the sample (306) as the sample light beam (304) is scanned laterally (308) across the sample (306) by using optical path length differences OPLD, between the reference light beam (316) and the sample light beam (304).

15. A computer program with a program code to cause the scan control system of claim 13 to perform the method (200) according to any one of claims 1 to 12 when the computer program is run on a processor (904).

## Patentansprüche

1. Verfahren zur Charakterisierung eines Scanspiegels in einem Scansteuersystem zur Bestimmung von Steuerparametern zur Verwendung in einer Feedback-Konfiguration mit geschlossenem Regelkreis des Scansteuersystems, wobei das System (100) Folgendes umfasst:
eine Scanspiegelanordnung (102), die den Scanspiegel (104) umfasst;
einen positionssensitiven Detektor (106), der eine zweidimensionale Detektionsfläche (108) aufweist; wobei eine x-Achse und eine y-Achse die zweidimensionale Detektionsfläche (108) aufspannen;
eine Lichtquelle (110), die konfiguriert ist, einen Lichtstrahl (112) auf den Scanspiegel (104) auszusenden, sodass der Lichtstrahl (112) auf den positionssensitiven Detektor (106) abgelenkt wird, wobei der positionssensitive Detektor (106) konfiguriert ist, Folgendes auszugeben:
eine gemessene Position (114) auf der Grundlage der Position, an der der Lichtstrahl (112) auf die zweidimensionale Detektionsfläche (108) des positionssensitiven Detektors (106) auftrifft, wobei sich die gemessene Position (114) auf einen Kippwinkel (116) des Scanspiegels (104) bezieht; und
ein Summensignal (115), das sich auf die Intensität des Lichtstrahls (112) bezieht;
eine Scanspiegel-Steuereinheit (118), die konfiguriert ist, die Scanspiegelanordnung (102) unter Verwendung von Ansteuerparametern (120) anzusteuern, sodass der Scanspiegel (104) zweidimensional im Winkel gekippt wird; und
einen Prozessor (122), der mit der Scanspiegel-Steuereinheit (118) und einem Speicher (123) kommunikativ verbunden ist;
wobei das Verfahren (200) Folgendes umfasst:
Ansteuern (202) des Scanspiegels (104) unter Verwendung von Ansteuerparametern (120), während sich das Scansteuersystem (100) in einer Feedback-Konfiguration mit offenem Regelkreis befindet;
Bestimmen (204) eines Satzes von Systemparametern (124), die sich auf die Leistung des Scanspiegels (104) beziehen, wenn er angesteuert wird; und
Bestimmen (206) eines Satzes von Steuerparametern (126) auf der Grundlage des bestimmten Satzes von Systemparametern (124) und eines Satzes von Referenzparametern (128); und
Speichern (208) des Satzes von Steuerparametern (126) in dem Speicher (123);
wobei der Satz von Referenzparametern (128) eine Mittelposition (130) des positionssensitiven Detektors (106) umfasst und;
wobei das Verfahren das Zentrieren (203) des Scanspiegels (104) umfasst, während sich das Scansteuersystem (100) in einer Feedback-Konfiguration mit offenem Regelkreis befindet, sodass der Lichtstrahl (116) abgelenkt wird, um auf die Mittelposition (130) aufzutreffen.

2. Verfahren nach Anspruch 1, weiter umfassend:
Bestimmen (204) des Satzes von Systemparametern (124) auf der Grundlage der gemessenen Position (114) für den Lichtstrahl (112) auf dem positionssensitiven Detektor (106);
Bestimmen (206) des Satzes von Steuerparametern (126) auf der Grundlage von einem Lichtstrahlversatz (132) zwischen der gemessenen Position (114) und der Mittelposition (130).

3. Verfahren nach Anspruch 1 oder 2, wobei:
das Verfahren (200) ferner das Bestimmen (204) des Satzes von Systemparametern (124) auf der Grundlage von Summensignal (115) und das Speichern (208) des Summensignals (115) in dem Speicher (123) umfasst; und/oder
die x-Achse orthogonal zu der y-Achse ist.

4. Verfahren nach einem der Ansprüche 1 bis 3, wobei die gemessene Position (114) eine x-Koordinate entlang der x-Achse und die y-Koordinate entlang der y-Achse aufweist;
wobei das Bestimmen (204) des Satzes von Systemparametern (124) auf der Grundlage der gemessenen Position (114) wahlweise das Berechnen der x-Koordinate und der y-Koordinate unter Verwendung der jeweiligen Gleichung umfasst: $x = \frac{\left({X}_{2}+{Y}_{1}\right) - \left({X}_{1}+{Y}_{2}\right)}{\left({X}_{1}+{X}_{2}+{Y}_{1}+{Y}_{2}\right)} \times \frac{Lx}{2} and y = \frac{\left({X}_{2}+{Y}_{2}\right) - \left({X}_{1}+{Y}_{1}\right)}{\left({X}_{1}+{X}_{2}+{Y}_{1}+{Y}_{2}\right)} \times \frac{Ly}{2}$
, wobei X₁, X₂, Y₁ und Y₂ Strompegel sind, die an den Rändern der positionssensitiven Vorrichtung gemessen werden, *Lx* und *Ly* die jeweiligen Breiten der zweidimensionalen Detektionsfläche (108) sind und *(X₁ + X₂ + Y₁* + Y₂) das Summensignal (115) ist.

5. Verfahren nach einem der Ansprüche 1 bis 4, wobei das Verfahren (200) Folgendes umfasst:
Zentrieren (212) des Scanspiegels (104) unter Verwendung von Ansteuerparametern von der Scanspiegel-Steuereinheit (118), sodass der Lichtstrahl (112) abgelenkt wird, um auf die Mittelposition (130) des positionssensitiven Detektors (106) aufzutreffen;
Bestimmen (214) des Summensignals (115) an der Mittelposition (130); und
wenn das Summensignal (115) einen Intensitätswert aufweist, der mindestens dem eines ersten Schwellenintensitätswerts entspricht:
Ansteuern (216) unter Verwendung von Ansteuerparametern von der Scanspiegel-Steuereinheit (118), um den Scanspiegel (104) zu kippen, sodass der Lichtstrahl (112) abgelenkt wird, um auf den positionssensitiven Detektor (106) an einer ersten Startposition (134) aufzutreffen, wobei die erste Startposition (134) eine minimale x-Koordinate und eine minimale y-Koordinate aufweist;
Bestimmen (218) der gemessenen Position (114) für den Lichtstrahl (112), die sich auf die erste Startposition (134) bezieht, und Speichern (220) der gemessenen Position (114) in dem Speicher (123); und
Bestimmen (222) des Summensignals (115) an der ersten Startposition (134); und
wenn das Summensignal (115) einen Intensitätswert aufweist, der mindestens dem eines zweiten Schwellenintensitätswerts entspricht:
Einstellen (224) der Kippung des Scanspiegels (104) unter Verwendung von Ansteuerparametern, sodass der Lichtstrahl (112) zu anderen x-Koordinaten entlang der x-Achse bewegt wird; und
Bestimmen (226) des Summensignals (115) für jede der anderen x-Koordinaten, wobei das Einstellen (228) iteriert wird, während das Summensignal (115) einen Intensitätswert von mindestens dem eines dritten Schwellenintensitätswerts aufweist, bis zu einer ersten Endposition (136), die eine maximale x-Koordinate aufweist; wobei die minimale y-Koordinate während des Einstellens (224) konstant gehalten wird, sodass eine erste Scanlinie (138) auf dem positionssensitiven Detektor (106) erhalten wird;
Ansteuern (228) unter Verwendung von Ansteuerparametern von der Scanspiegel-Steuereinheit (118), um den Scanspiegel (104) zu kippen, sodass der Lichtstrahl (112) abgelenkt wird, um auf den positionssensitiven Detektor (106) an einer zweiten Startposition (140) aufzutreffen, wobei die zweite Startposition (140) eine minimale x-Koordinate und eine maximale y-Koordinate aufweist;
Bestimmen (230) der gemessenen Position (114) für den Lichtstrahl (112), die sich auf die zweite Startposition (140) bezieht, und Speichern (232) der gemessenen Position (114) in dem Speicher (123); und
Bestimmen (234) des Summensignals (115) an der zweiten Startposition (140); und
wenn das Summensignal (115) einen Intensitätswert aufweist, der mindestens dem eines vierten Schwellenintensitätswerts entspricht:
Einstellen (236) der Kippung des Scanspiegels (104) unter Verwendung von Ansteuerparametern, sodass der Lichtstrahl (112) zu anderen x-Koordinaten entlang der x-Achse bewegt wird; und
Bestimmen (238) des Summensignals (115) für jede der anderen x-Koordinaten, wobei das Einstellen (236) iteriert wird, während das Summensignal (115) einen Intensitätswert von mindestens dem eines fünften Schwellenintensitätswerts aufweist, bis zu einer zweiten Endposition (142), die eine maximale x-Koordinate aufweist; wobei die maximale y-Koordinate während des Einstellens (236) konstant gehalten wird, sodass eine zweite Scanlinie (144) auf dem positionssensitiven Detektor (106) erhalten wird.

6. Verfahren nach einem der Ansprüche 1 bis 5, wobei das Verfahren (200) die Charakterisierung einer Rotationsrichtung des Scanspiegels (104) umfasst durch:
Ansteuern (202) unter Verwendung eines ersten Satzes von Ansteuerparametern von der Scanspiegel-Steuereinheit (118), um den Scanspiegel (104) zu scannen, sodass der Lichtstrahl (112) über die zweidimensionale Detektionsfläche (108) des positionssensitiven Detektors (106) gescannt wird und dadurch eine dritte Scanlinie (148a) bildet, wobei die dritte Scanlinie (148a) entlang der x-Achse der zweidimensionalen Detektionsfläche (108) verläuft;
Bestimmen (204) des Satzes von Systemparametern (124) auf der Grundlage eines ersten Satzes von gemessenen Positionen (150a) für die dritte Scanlinie (148a);
Bestimmen (206) des Satzes von Steuerparametern (126) auf der Grundlage von einem ersten Rotationsabweichungswert (152a) für den ersten Satz von gemessenen Positionen (150a) relativ zu der x-Achse unter Verwendung von einem mathematischen Modell.

7. Verfahren nach einem der Ansprüche 1 bis 6, wobei das Verfahren (200) die Charakterisierung einer Rotationsrichtung des Scanspiegels (104) umfasst durch:
Ansteuern (202) unter Verwendung eines zweiten Satzes von Ansteuerparametern von der Scanspiegel-Steuereinheit (118), um den Scanspiegel (104) zu scannen, sodass der Lichtstrahl (112) über die zweidimensionale Detektionsfläche (108) des positionssensitiven Detektors (106) gescannt wird und dadurch eine vierte Scanlinie (148b) bildet, wobei die vierte Scanlinie (148b) entlang der y-Achse der zweidimensionalen Detektionsfläche (108) verläuft;
Bestimmen (204) des Satzes von Systemparametern (124) auf der Grundlage eines zweiten Satzes von gemessenen Positionen (150b) für die vierte Scanlinie (148b);
Bestimmen (206) des Satzes von Steuerparametern (126) auf der Grundlage von einem zweiten Rotationsabweichungswert (152b) für den zweiten Satz von gemessenen Positionen (150b) relativ zu der y-Achse unter Verwendung von einem mathematischen Modell.

8. Verfahren nach Anspruch 6 oder 7, wobei das Verfahren (200) das Durchführen einer linearen Kurvenanpassung an mindestens einen von dem ersten Satz und dem zweiten Satz von gemessenen Positionen (150a, 150b) umfasst, um jeweils den ersten und den zweiten Rotationsabweichungswert (152a, 152b) zu bestimmen.

9. Verfahren nach einem der Ansprüche 6 oder 8, wobei das mathematische Modell von der Form ist: $θ = {sin}^{- 1} \left(\frac{Δ x}{r}\right) θ = {sin}^{- 1} \left(\frac{Δ y}{r}\right)$
, wobei Θ ein Rotationswinkel ist, *r* der Radius ist, Δx und Δy jeweils die Rotationsabweichungswerte relativ zu der x-Achse bzw. y-Achse sind und der Satz von Steuerparametern (126) auf der Grundlage der Transformation ist: $\left[\begin{matrix}x \\ y\end{matrix}\right] = \left[\begin{matrix}cos \left(θ\right) & sin \left(θ\right) \\ - sin \left(θ\right) & cos \left(θ\right)\end{matrix}\right] \left[\begin{matrix}x ′ \\ y ′\end{matrix}\right]$
, wobei Θ der Rotationswinkel ist, x' und *y'* die gemessenen Positionen sind und x und y kompensierte Positionen nach der Verwendung der Transformation sind.

10. Verfahren nach einem der Ansprüche 1 bis 9, wobei das System (100) ferner einen Verstärker (154) umfasst, der konfiguriert ist, einen Strom zu verstärken, der erzeugt wird, wenn der Lichtstrahl (112) auf die zweidimensionale Detektionsfläche (108) des positionssensitiven Detektors (106) auftrifft, wobei der Verstärker (154) einen Offset-Eingang (156) aufweist, wobei das Verfahren (200) Folgendes umfasst:
Bestimmen (204) für jede gemessene Position (114) des Satzes von Systemparametern (124) auf der Grundlage des Summensignals (115); und
Bestimmen (206) des Satzes von Steuerparametern (126), der das Summensignal (115) als ein Offsetsignal umfasst, sodass der Ausgangsstrom von dem Verstärker (154) für jede gemessene Position (114) auf einem Mittelwert gehalten wird;
wobei das Verfahren ferner wahlweise das Einstellen (240) der Intensität des Lichtstrahls (112) umfasst, sodass das Summensignal (115) konstant gehalten wird, wobei eine Verstärkung für den Verstärker (154) innerhalb eines Verstärkungsbereichs gehalten wird.

11. Verfahren nach einem der Ansprüche 1 bis 10, wobei das System (100) ferner eine Verstärkerschaltung (158) umfasst, die konfiguriert ist, Signale, die sich auf gemessene Positionen (114) von der positionssensitiven Vorrichtung (106) beziehen, zu verstärken und die verstärkten Signale an die Scanspiegel-Steuereinheit (118) zu senden, wobei das Verfahren (200) Folgendes umfasst:
Ansteuern (242) unter Verwendung eines fünften Satzes von Ansteuerparametern (160) von der Scanspiegel-Steuereinheit (118), um den Scanspiegel (104) zu scannen, sodass der Lichtstrahl (112) über eine erste Distanz (162) entlang der x-Achse und über eine zweite Distanz (164) entlang der y-Achse gescannt wird, wobei die erste und die zweite Distanz (160, 162) ein vorgegebenes Längenverhältnis aufweisen;
Bestimmen (204) des Satzes von Systemparametern (124) auf der Grundlage von einem dritten und einem vierten Satz von gemessenen Positionen (166, 168), die sich jeweils auf die erste bzw. die zweite Scan-Distanz (162, 164) beziehen; und
Bestimmen (206) des Satzes von Steuerparametern (126) auf der Grundlage von einem gemessenen Längenverhältnis für den dritten und vierten Satz von gemessenen Positionen (166, 168), wobei die Steuerparameter (126) einen Verstärkungsanpassungsfaktor für die Verstärkerschaltung (158) umfassen, sodass ein Unterschied zwischen dem gemessenen Längenverhältnis und dem vorgegebenen Längenverhältnis kompensiert wird.

12. Verfahren nach einem der Ansprüche 1 bis 11, wobei das System (100) ferner eine Signalgeneratoranordnung (170) umfasst, die konfiguriert ist, den Scanspiegel (104) bei einem Bereich von Ansteuerfrequenzen anzusteuern und für jede der Ansteuerfrequenzen eine Frequenzgangamplitude zu bestimmen, und einen Satz von Kerbfiltern (172), die jeweils konfiguriert sind, ein Frequenzband um eine Mittenfrequenz zu dämpfen, wobei das Verfahren (200) Folgendes umfasst:
Ansteuern (244) des Scanspiegels (104) über einen Bereich von Ansteuerfrequenzen durch die Signalgeneratoranordnung (170);
Bestimmen (246) von Frequenzgangamplituden für den Scanspiegel (104) für jede Ansteuerfrequenz, um eine Resonanzfrequenz (174) zu identifizieren;
Bestimmen (204) des Satzes von Systemparametern (124) auf der Grundlage von einer Anpassung einer Mittenfrequenz eines der Sätze von Kerbfiltern (172) an die identifizierte Resonanzfrequenz (174); und
Bestimmen (206) des Satzes von Steuerparametern (126) auf der Grundlage von der angepassten Mittenfrequenz, wodurch die Verwendung des Kerbfilters (172) mit der angepassten Mittenfrequenz in einer Feedback-Konfiguration mit geschlossenem Regelkreis des Scansteuersystems ermöglicht wird.

13. Scansteuersystem, das angeordnet ist, das Verfahren (200) nach einem der Ansprüche 1 bis 12 durchzuführen, wobei das System (100) Folgendes umfasst:
eine Scanspiegelanordnung (102), die den Scanspiegel (104) umfasst;
einen positionssensitiven Detektor (106), der eine zweidimensionale Detektionsfläche (108) aufweist;
eine Lichtquelle (110), die konfiguriert ist, einen Lichtstrahl (112) auf den Scanspiegel (104) auszusenden, sodass der Lichtstrahl (112) auf den positionssensitiven Detektor (106) abgelenkt wird, wobei der positionssensitive Detektor (106) konfiguriert ist, eine gemessene Position (114) auf der Grundlage von der Position auszugeben, an der der Lichtstrahl (112) auf die zweidimensionale Detektionsfläche (108) des positionssensitiven Detektors (106) auftrifft, wobei sich die gemessene Position (114) auf einen Kippwinkel (116) des Scanspiegels (104) bezieht;
eine Scanspiegel-Steuereinheit (118), die konfiguriert ist, die Scanspiegelanordnung (102) unter Verwendung von Ansteuerparametern (120) anzusteuern, sodass der Scanspiegel (104) zweidimensional im Winkel gekippt wird; und
einen Prozessor (122), der mit der Scanspiegel-Steuereinheit (118) kommunikativ verbunden ist, wobei die Scanspiegel-Steuereinheit (118) konfiguriert ist, einen Satz von Steuerparametern (126) zur Verwendung in einer Feedback-Konfiguration mit geschlossenem Regelkreis des Scansteuersystems zu empfangen.

14. Optisches Kohärenztomografiesystem, OCT, das konfiguriert ist, unter Verwendung des Scansteuersystems (100) nach Anspruch 16 zu arbeiten, wobei das OCT-System (300) ferner Folgendes umfasst:
eine Probenlichtquelle (302), die konfiguriert ist, einen Probenlichtstrahl (304) auf den Scanspiegel (104) auszusenden, sodass der Probenlichtstrahl (304) auf eine Probe (306) abgelenkt wird, wobei die Scansteuereinheit konfiguriert ist, den Probenlichtstrahl (304) unter Verwendung der Positionsrückkopplung mit geschlossenem Regelkreis lateral über eine Oberfläche (310) der Probe (306) zu scannen (308); und
ein optisches Detektionssystem (312), das konfiguriert ist, von der Probe (306) zurückreflektiertes Licht zu detektieren, sodass ein optisches Bild (314) der Probe (306) erhalten wird, und einen Referenzlichtstrahl (316), wobei das OCT-System (300) konfiguriert ist, axial aufgelöste optische Informationen (318) aus der Probe (306) zu erzeugen, während der Probenlichtstrahl (304) lateral (308) über die Probe (306) gescannt wird, durch Verwendung von optischen Weglängendifferenzen OPLD zwischen dem Referenzlichtstrahl (316) und dem Probenlichtstrahl.

15. Computerprogramm mit einem Programmcode, um das Scansteuersystem nach Anspruch 13 zu veranlassen, das Verfahren (200) nach einem der Ansprüche 1 bis 12 durchzuführen, wenn das Computerprogramm auf einem Prozessor (904) ausgeführt wird.

## Revendications

1. Procédé de caractérisation d'un miroir de balayage dans un système de commande de balayage pour déterminer des paramètres de commande destinés à être utilisés dans une configuration de rétroaction en boucle fermée du système de commande de balayage, le système (100) comprenant :
un ensemble de miroir de balayage (102) comprenant le miroir de balayage (104) ;
un détecteur sensible à la position (106) présentant une surface de détection bidimensionnelle (108) ; dans lequel un axe x et un axe y s'étendent sur la surface de détection bidimensionnelle (108) ;
une source lumineuse (110) configurée pour émettre un faisceau lumineux (112) sur le miroir de balayage (104) de telle sorte que le faisceau lumineux (112) est dévié sur le détecteur sensible à la position (106), dans lequel le détecteur sensible à la position (106) est configuré pour délivrer en sortie :
une position mesurée (114) sur la base de la position à laquelle le faisceau lumineux (112) vient en incidence sur la surface de détection bidimensionnelle (108) du détecteur sensible à la position (106), dans lequel la position mesurée (114) se rapporte à un angle d'inclinaison (116) du miroir de balayage (104) ; et
un signal de somme (115) se rapportant à l'intensité du faisceau lumineux (112) ;
une unité de commande du miroir de balayage (118) configurée pour entraîner, en utilisant des paramètres d'entraînement (120), l'ensemble de miroir de balayage (102) de telle sorte que le miroir de balayage (104) est incliné angulairement en deux dimensions ; et
un processeur (122) étant en communication avec l'unité de commande du miroir de balayage (118) et une mémoire (123) ;
dans lequel le procédé (200) comprend :
le fait d'entraîner (202) le miroir de balayage (104) en utilisant des paramètres d'entraînement (120) tandis que le système de commande de balayage (100) est dans une configuration de rétroaction en boucle ouverte ;
le fait de déterminer (204) un ensemble de paramètres du système (124) se rapportant à la performance du miroir de balayage (104) lorsqu'il est entraîné ; et
le fait de déterminer (206) un ensemble de paramètres de commande (126) sur la base de l'ensemble déterminé de paramètres du système (124) et d'un ensemble de paramètres de référence (128) ; et
le fait de stocker (208) l'ensemble de paramètres de commande (126) dans la mémoire (123) ;
dans lequel l'ensemble de paramètres de référence (128) comprend une position centrale (130) du détecteur sensible à la position (106) et ;
dans lequel le procédé comprend le centrage (203) du miroir de balayage (104) tandis que le système de commande de balayage (100) est dans une configuration de rétroaction en boucle ouverte de telle sorte que le faisceau lumineux (116) est dévié pour venir en incidence sur la position centrale (130).

2. Procédé selon la revendication 1, comprenant en outre :
le fait de déterminer (204) l'ensemble de paramètres du système (124) sur la base de la position mesurée (114) pour le faisceau lumineux (112) sur le détecteur sensible à la position (106) ;
le fait de déterminer (206) l'ensemble de paramètres de commande (126) sur la base d'un décalage du faisceau lumineux (132) entre la position mesurée (114) et la position centrale (130).

3. Procédé selon la revendication 1 ou la revendication 2, dans lequel :
le procédé (200) comprend en outre la détermination (204) de l'ensemble de paramètres du système (124) sur la base du signal de somme (115) et le stockage (208) du signal de somme (115) dans la mémoire (123) ; et/ou
l'axe x est orthogonal à l'axe y.

4. Procédé selon l'une quelconque des revendications 1 à 3, dans lequel la position mesurée (114) présente une coordonnée x le long de l'axe x et la coordonnée y le long de l'axe y ;
dans lequel, facultativement, la détermination (204) de l'ensemble de paramètres du système (124) sur la base de la position mesurée (114) comprend le calcul de la coordonnée x et de la coordonnée y en utilisant l'équation respective : $x = \frac{\left({X}_{2}+{Y}_{1}\right) - \left({X}_{1}+{Y}_{2}\right)}{\left({X}_{1}+{X}_{2}+{Y}_{1}+{Y}_{2}\right)} \times \frac{Lx}{2} et y = \frac{\left({X}_{2}+{Y}_{2}\right) - \left({X}_{1}+{Y}_{1}\right)}{\left({X}_{1}+{X}_{2}+{Y}_{1}+{Y}_{2}\right)} \times \frac{Ly}{2}$
, dans lequel X₁, X₂, Y₁ et Y₂ sont des niveaux de courant mesurés aux bords du dispositif sensible à la position, *Lx* et *Ly* sont les largeurs respectives de la surface de détection bidimensionnelle (108), et dans lequel (*X₁ + X₂ + Y₁ + Y₂*) est le signal de somme (115).

5. Procédé selon l'une quelconque des revendications 1 à 4, dans lequel le procédé (200) comprend :
le fait de centrer (212), en utilisant des paramètres d'entraînement provenant de l'unité de commande du miroir de balayage (118), le miroir de balayage (104) de telle sorte que le faisceau lumineux (112) est dévié pour venir en incidence sur la position centrale (130) du détecteur sensible à la position (106) ;
le fait de déterminer (214) le signal de somme (115) à la position centrale (130) ; et
si le signal de somme (115) présente une valeur d'intensité étant au moins celle d'une première valeur d'intensité de seuil :
le fait d'entraîner (216), en utilisant des paramètres d'entraînement provenant de l'unité de commande du miroir de balayage (118), de façon à incliner le miroir de balayage (104) de telle sorte que le faisceau lumineux (112) est dévié pour venir en incidence sur le détecteur sensible à la position (106) en une première position de départ (134), la première position de départ (134) présentant une coordonnée x minimale et une coordonnée y minimale ;
le fait de déterminer (218) la position mesurée (114) pour le faisceau lumineux (112) se rapportant à la première position de départ (134) et stocker (220) la position mesurée (114) dans la mémoire (123) ; et
le fait de déterminer (222) le signal de somme (115) à la première position de départ (134) ; et
si le signal de somme (115) présente une valeur d'intensité au moins égale à celle d'une deuxième valeur d'intensité de seuil :
le fait d'ajuster (224) l'inclinaison du miroir de balayage (104) en utilisant des paramètres d'entraînement de telle sorte que le faisceau lumineux (112) est déplacé vers d'autres coordonnées x le long de l'axe x ; et
le fait de déterminer (226) le signal de somme (115) pour chacune des autres coordonnées x, dans lequel l'ajustement (228) est itéré tandis que le signal de somme (115) présente une valeur d'intensité d'au moins celle d'une troisième valeur d'intensité de seuil, jusqu'à une première position d'extrémité (136) présentant une coordonnée x maximale ; dans lequel la coordonnée y minimale est maintenue constante pendant l'ajustement (224) de telle sorte qu'une première ligne de balayage (138) est obtenue sur le détecteur sensible à la position (106) ;
le fait d'entraîner (228), en utilisant des paramètres d'entraînement provenant de l'unité de commande du miroir de balayage (118), de façon à incliner le miroir de balayage (104) de telle sorte que le faisceau lumineux (112) est dévié pour venir en incidence sur le détecteur sensible à la position (106) en une deuxième position de départ (140), la deuxième position de départ (140) présentant une coordonnée x minimale et une coordonnée y maximale ;
le fait de déterminer (230) la position mesurée (114) pour le faisceau lumineux (112) se rapportant à la deuxième position de départ (140) et stocker (232) la position mesurée (114) dans la mémoire (123) ; et
le fait de déterminer (234) le signal de somme (115) à la deuxième position de départ (140) ; et
si le signal de somme (115) présente une valeur d'intensité au moins égale à celle d'une quatrième valeur d'intensité de seuil :
le fait d'ajuster (236) l'inclinaison du miroir de balayage (104) en utilisant des paramètres d'entraînement de telle sorte que le faisceau lumineux (112) est déplacé vers d'autres coordonnées x le long de l'axe x ; et
le fait de déterminer (238) le signal de somme (115) pour chacune des autres coordonnées x, dans lequel l'ajustement (236) est itéré tandis que le signal de somme (115) présente une valeur d'intensité d'au moins celle d'une cinquième valeur d'intensité de seuil, jusqu'à une deuxième position d'extrémité (142) présentant une coordonnée x maximale ; dans lequel la coordonnée y maximale est maintenue constante pendant l'ajustement (236) de telle sorte qu'une deuxième ligne de balayage (144) est obtenue sur le détecteur sensible à la position (106).

6. Procédé selon l'une quelconque des revendications 1 à 5, le procédé (200) comprenant la caractérisation d'une direction de rotation du miroir de balayage (104) par :
le fait d'entraîner (202) en utilisant un premier ensemble de paramètres d'entraînement provenant de l'unité de commande du miroir de balayage (118) pour balayer le miroir de balayage (104) de telle sorte que le faisceau lumineux (112) est balayé sur la surface de détection bidimensionnelle (108) du détecteur sensible à la position (106), formant ainsi une troisième ligne de balayage (148a), dans lequel la troisième ligne de balayage (148a) est le long de l'axe x de la surface de détection bidimensionnelle (108) ;
le fait de déterminer (204) l'ensemble de paramètres du système (124) sur la base d'un premier ensemble de positions mesurées (150a) pour la troisième ligne de balayage (148a) ;
le fait de déterminer (206) l'ensemble de paramètres de commande (126) sur la base d'une première valeur d'écart de rotation (152a) pour le premier ensemble de positions mesurées (150a) par rapport à l'axe x en utilisant un modèle mathématique.

7. Procédé selon l'une quelconque des revendications 1 à 6, le procédé (200) comprenant la caractérisation d'une direction de rotation du miroir de balayage (104) par :
le fait d'entraîner (202) en utilisant un deuxième ensemble de paramètres d'entraînement provenant de l'unité de commande du miroir de balayage (118) pour balayer le miroir de balayage (104) de telle sorte que le faisceau lumineux (112) est balayé sur la surface de détection bidimensionnelle (108) du détecteur sensible à la position (106), formant ainsi une quatrième ligne de balayage (148b), dans lequel la quatrième ligne de balayage (148b) est le long de l'axe y de la surface de détection bidimensionnelle (108) ;
le fait de déterminer (204) l'ensemble de paramètres du système (124) sur la base d'un deuxième ensemble de positions mesurées (150b) pour la quatrième ligne de balayage (148b) ;
le fait de déterminer (206) l'ensemble de paramètres de commande (126) sur la base d'une deuxième valeur d'écart de rotation (152b) pour le deuxième ensemble de positions mesurées (150b) par rapport à l'axe y en utilisant un modèle mathématique.

8. Procédé selon la revendication 6 ou la revendication 7, dans lequel le procédé (200) comprend l'exécution d'un ajustement linéaire de courbe sur au moins l'un du premier et du deuxième ensemble de positions mesurées (150a, 150b) pour déterminer respectivement la première et la deuxième valeur d'écart de rotation (152a, 152b).

9. Procédé selon l'une quelconque des revendications 6 ou 8, dans lequel le modèle mathématique est de la forme : $θ = {sin}^{- 1} \left(\frac{Δ x}{r}\right) θ = {sin}^{- 1} \left(\frac{Δ y}{r}\right)$
, où *Θ* est un angle de rotation, r est le rayon, Δx et Δy sont les valeurs d'écart de rotation par rapport à l'axe x et à l'axe y, respectivement, et dans lequel l'ensemble de paramètres de commande (126) est sur la base de la transformation : $\left[\begin{matrix}x \\ y\end{matrix}\right] = \left[\begin{matrix}cos \left(θ\right) & sin \left(θ\right) \\ - sin \left(θ\right) & cos \left(θ\right)\end{matrix}\right] \left[\begin{matrix}x ′ \\ y ′\end{matrix}\right]$
, où *Θ* est l'angle de rotation, x' et y' sont les positions mesurées et x et y sont des positions compensées après utilisation de la transformation.

10. Procédé selon l'une quelconque des revendications 1 à 9, dans lequel le système (100) comprend en outre un amplificateur (154) configuré pour amplifier un courant généré lorsque le faisceau lumineux (112) vient en incidence sur la surface de détection bidimensionnelle (108) du détecteur sensible à la position (106), l'amplificateur (154) présentant une entrée de décalage (156), dans lequel le procédé (200) comprend :
le fait de déterminer (204), pour chaque position mesurée (114), l'ensemble de paramètres du système (124) sur la base du signal de somme (115) ; et
le fait de déterminer (206) l'ensemble de paramètres de commande (126) comprenant le signal de somme (115) en tant que signal de décalage de telle sorte qu'un courant de sortie provenant de l'amplificateur (154) est maintenu à une valeur à mi-échelle pour chaque position mesurée (114) ;
dans lequel, facultativement, le procédé comprend en outre l'ajustement (240) de l'intensité du faisceau lumineux (112) de sorte que le signal de somme (115) est maintenu constant, de telle sorte qu'un gain d'amplification pour l'amplificateur (154) est maintenu à l'intérieur d'une plage d'amplification.

11. Procédé selon l'une quelconque des revendications 1 à 10, dans lequel le système (100) comprend en outre un circuit d'amplification (158) configuré pour amplifier des signaux se rapportant à des positions mesurées (114) provenant du dispositif sensible à la position (106) et pour envoyer les signaux amplifiés à l'unité de commande du miroir de balayage (118), le procédé (200) comprend :
le fait d'entraîner (242) en utilisant un cinquième ensemble de paramètres d'entraînement (160) provenant de l'unité de commande du miroir de balayage (118) pour balayer le miroir de balayage (104) de telle sorte que le faisceau lumineux (112) est balayé sur une première distance (162) le long de l'axe x et une deuxième distance (164) le long de l'axe y, dans lequel les première et deuxième distances (160, 162) présentent un rapport de longueur réglé ;
le fait de déterminer (204) l'ensemble de paramètres du système (124) sur la base d'un troisième et d'un quatrième ensemble de positions mesurées (166, 168) se rapportant respectivement aux première et deuxième distances de balayage (162, 164) ; et
le fait de déterminer (206) l'ensemble de paramètres de commande (126) sur la base d'un rapport de longueur mesuré pour les troisième et quatrième ensembles de positions mesurées (166, 168), dans lequel les paramètres de commande (126) comprennent un facteur d'ajustement d'amplification pour le circuit d'amplification (158) de telle sorte qu'une différence entre le rapport de longueur mesuré et le rapport de longueur réglé est compensée.

12. Procédé selon l'une quelconque des revendications 1 à 11, dans lequel le système (100) comprend en outre un ensemble de générateur de signaux (170) configuré pour entraîner le miroir de balayage (104) à une plage de fréquences d'entraînement et pour déterminer une amplitude de réponse en fréquence pour chacune des fréquences d'entraînement, et un ensemble de filtres coupe-bande (172) chacun configuré pour atténuer une bande de fréquences autour d'une fréquence centrale, dans lequel le procédé (200) comprend :
le fait d'entraîner (244), par l'ensemble de générateur de signaux (170), le miroir de balayage (104) sur une plage de fréquences d'entraînement ;
le fait de déterminer (246) des amplitudes de réponse en fréquence pour le miroir de balayage (104) pour chaque fréquence d'entraînement afin d'identifier une fréquence de résonance (174) ;
le fait de déterminer (204) l'ensemble de paramètres du système (124) sur la base d'une mise en correspondance d'une fréquence centrale de l'un de l'ensemble de filtres coupe-bande (172) avec la fréquence de résonance identifiée (174) ; et
le fait de déterminer (206) l'ensemble de paramètres de commande (126) sur la base de la fréquence centrale mise en correspondance, permettant ainsi l'utilisation du filtre coupe-bande (172) présentant la fréquence centrale mise en correspondance dans une configuration de rétroaction en boucle fermée du système de commande de balayage.

13. Système de commande de balayage agencé pour mettre en œuvre le procédé (200) selon l'une quelconque des revendications 1 à 12, le système (100) comprenant :
un ensemble de miroir de balayage (102) comprenant le miroir de balayage (104) ;
un détecteur sensible à la position (106) présentant une surface de détection bidimensionnelle (108) ;
une source lumineuse (110) configurée pour émettre un faisceau lumineux (112) sur le miroir de balayage (104) de telle sorte que le faisceau lumineux (112) est dévié sur le détecteur sensible à la position (106), dans lequel le détecteur sensible à la position (106) est configuré pour délivrer en sortie une position mesurée (114) sur la base de la position à laquelle le faisceau lumineux (112) vient en incidence sur la surface de détection bidimensionnelle (108) du détecteur sensible à la position (106), la position mesurée (114) se rapportant à un angle d'inclinaison (116) du miroir de balayage (104) ;
une unité de commande du miroir de balayage (118) configurée pour entraîner, en utilisant des paramètres d'entraînement (120), l'ensemble de miroir de balayage (102) de telle sorte que le miroir de balayage (104) est incliné angulairement en deux dimensions ; et
un processeur (122) en communication avec l'unité de commande du miroir de balayage (118), dans lequel l'unité de commande du miroir de balayage (118) est configurée pour recevoir un ensemble de paramètres de commande (126) destiné à être utilisé dans une configuration de rétroaction en boucle fermée du système de commande de balayage.

14. Système de tomographie en cohérence optique (OCT) configuré pour fonctionner en utilisant le système de commande de balayage (100) selon la revendication 16, le système de tomographie en cohérence optique (OCT) (300) comprenant en outre :
une source lumineuse d'échantillon (302) configurée pour émettre un faisceau lumineux d'échantillon (304) sur le miroir de balayage (104) de telle sorte que le faisceau lumineux d'échantillon (304) est dévié sur un échantillon (306), dans lequel l'unité de commande du miroir de balayage est configurée pour balayer latéralement (308) le faisceau lumineux d'échantillon (304) à travers une surface (310) de l'échantillon (306) en utilisant la rétroaction de position en boucle fermée ; et
un système de détection optique (312) configuré pour détecter une lumière réfléchie en retour depuis l'échantillon (306) de telle sorte qu'une image optique (314) de l'échantillon (306) est obtenue, et un faisceau lumineux de référence (316), dans lequel le système de tomographie en cohérence optique (OCT) (300) est configuré pour générer des informations optiques à résolution axiale (318) à partir de l'échantillon (306) lorsque le faisceau lumineux d'échantillon (304) est balayé latéralement (308) à travers l'échantillon (306) en utilisant des différences de longueur de trajet optique OPLD, entre le faisceau lumineux de référence (316) et le faisceau lumineux d'échantillon.

15. Programme informatique avec un code de programme pour amener le système de commande de balayage de la revendication 13 à mettre en œuvre le procédé (200) selon l'une quelconque des revendications 1 à 12 lorsque le programme informatique est exécuté sur un processeur (904).
